# EUROPEAN PATENT APPLICATION

(11) **EP 4 622 310 A1**
(43) Date of publication of application: **24.09.2025**
(21) Application number: 23905289.7
(22) Date of filing: 23.08.2023
(51) Int. Cl.: H04W 4/80

(54) **SHORT-RANGE COMMUNICATION METHOD AND APPARATUS, AND ELECTRONIC DEVICE**

(30) Priority: 19.12.2022 CN 202211634587
(71) Applicant: Honor Device Co., Ltd., Shenzhen, Guangdong 518040 (CN)
(72) Inventor: SHEN, Li, Shenzhen, Guangdong 518040 (CN)
(74) Representative: Goddar, Heinz J.
(86) International application number: PCT/CN2023/114460
(87) International publication number: WO 2024/131110

(57) **Abstract**

Embodiments of this application are applied to the communication field, and provide a short-distance communication method and apparatus and an electronic device. In a scenario in which an operating frequency band of Wi-Fi communication coincides with an operating frequency band of Bluetooth communication, the Bluetooth communication and the Wi-Fi communication are flexibly performed in different operation modes based on isolation between a first antenna and a second antenna, to be specific, when the isolation between the first antenna and the second antenna is less than a first isolation threshold, communication is performed in a first parallel mode; and when the isolation between the first antenna and the second antenna is less than a second isolation threshold, communication is performed in a time division mode. In this way, communication is performed in different operation modes with different isolation, so that interference between the Wi-Fi communication and the Bluetooth communication can be reduced as much as possible to maintain relatively good transmission performance, not only improving system flexibility, but also improving system stability.

## Description

This application claims priority to Chinese Patent Application No. 202211634587.2, filed with the China National Intellectual Property Administration on December 19, 2022 and entitled "SHORT-DISTANCE COMMUNICATION METHOD AND APPARATUS AND ELECTRONIC DEVICE", which is incorporated herein by reference in its entirety.

### TECHNICAL FIELD

This application relates to the communication field, and more specifically, to a short-distance communication method and apparatus and an electronic device in the communication field.

### BACKGROUND

With development of communication, most of current electronic devices support short-distance communication of wireless fidelity (Wi-Fi) and Bluetooth, and the Wi-Fi and the Bluetooth share an antenna. In a communication process, the Wi-Fi and the Bluetooth preempt the shared antenna, and Wi-Fi communication and Bluetooth communication are separately performed in a time division multiplexing manner. However, problems such as frame freezing, delay, and deterioration of a communication rate are caused.

Based thereupon, a related technology proposes that the Bluetooth is allowed to use an antenna (for example, a cellular antenna) independent of a Wi-Fi antenna. In this way, the Bluetooth communication and the Wi-Fi communication can be simultaneously performed. Currently, an operating frequency band of the Bluetooth communication is 2.4 GHz. If the Wi-Fi communication and the Bluetooth communication are simultaneously performed, when the Wi-Fi communication also operates in the 2.4 GHz operating frequency band, the operating frequency band of the Wi-Fi communication mostly coincides with the operating frequency band of the Bluetooth communication. In addition, when the operating bandwidth of the Wi-Fi communication in the 2.4 GHz operating frequency band is 40 MHz, there are not many frequencies, including the isolation protection bandwidth, available for the Bluetooth communication, affecting transmission performance of the Bluetooth communication. Moreover, when the Wi-Fi communication and the Bluetooth communication are simultaneously performed, mutual interference is caused, affecting the transmission performance of the Bluetooth communication and the Wi-Fi communication. Especially in a scenario with a high requirement on real-time performance, such as a video call scenario or a game scenario, user experience is severely affected.

Based thereupon, a technology needs to be provided urgently to satisfy transmission requirements of the Wi-Fi communication and the Bluetooth communication as simultaneously as possible.

### SUMMARY

Embodiments of this application provide a short-distance communication method and apparatus and an electronic device. In different isolation, Bluetooth communication and Wi-Fi communication are flexibly performed in different operation modes, so that interference between the Wi-Fi communication and the Bluetooth communication can be reduced as much as possible and relatively good transmission performance can be maintained, not only improving system flexibility, but also improving system stability.

According to a first aspect, a short-distance communication method is provided, applied to an electronic device, where the electronic device is configured with a first antenna and a second antenna, the first antenna is different from the second antenna, and the method includes:
determining that the electronic device needs to enter a parallel mode of Bluetooth communication and wireless fidelity Wi-Fi communication, where the parallel mode indicates that the Bluetooth communication and the Wi-Fi communication are separately performed by using different antennas, and an operating frequency band of the Bluetooth communication is the same as an operating frequency band of the Wi-Fi communication;
determining that an operating bandwidth in which the electronic device currently performs the Wi-Fi communication by using the second antenna is a second operating bandwidth; and
performing communication in a first parallel mode when isolation between the first antenna and the second antenna is less than a first isolation threshold, where the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
performing communication in a time division mode when isolation between the first antenna and the second antenna is less than a second isolation threshold, where the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

According to the short-distance communication method provided in this embodiment of this application, when the operating frequency band of the Wi-Fi communication coincides with the operating frequency band of the Bluetooth communication (for example, the operating frequency band of both the Wi-Fi communication and the Bluetooth communication is a 2.4 GHz operating frequency band), the Bluetooth communication and the Wi-Fi communication are flexibly performed in different operation modes based on the isolation between the first antenna and the second antenna, to be specific, when the isolation between the first antenna and the second antenna is less than the first isolation threshold, communication is performed in the first parallel mode; and when the isolation between the first antenna and the second antenna is less than the second isolation threshold, communication is performed in the time division mode. Because isolation between antennas greatly affects the transmission performance of communication, an operation mode of the Bluetooth communication and the Wi-Fi communication is determined based on the isolation between the antennas. In this way, communication is performed in different operation modes with different isolation, so that interference between the Wi-Fi communication and the Bluetooth communication can be reduced as much as possible to maintain relatively good transmission performance, not only improving system flexibility, but also improving system stability.

In addition, when it is determined that the electronic device has a requirement of entering the parallel mode, a suitable operation mode is determined based on isolation, avoiding invalid operations, and improving practicality.

Optionally, the method further includes:
performing communication in a second parallel mode when the isolation between the first antenna and the second antenna is greater than the first isolation threshold, where the second parallel mode indicates that the Bluetooth communication is performed by using the first antenna and the Wi-Fi communication is performed by using the second antenna, and the operating bandwidth of the Wi-Fi communication is the second operating bandwidth.

According to the short-distance communication method provided in this embodiment of this application, when the isolation between the first antenna and the second antenna is greater than the first isolation threshold, it means that the isolation between the first antenna and the second antenna is large enough, and a protection and isolation bandwidth is relatively small. In this way, even if the operating bandwidth of the Wi-Fi communication is the second operating bandwidth which is a large bandwidth, a suitable bandwidth can be provided for the Bluetooth communication. Therefore, the electronic device performs communication in the second parallel mode. In this way, transmission requirements of the Wi-Fi communication and the Bluetooth communication can be met while the interference can be effectively reduced. In addition, the Wi-Fi communication can benefit from a large bandwidth.

Optionally, the performing communication in a first parallel mode when isolation between the first antenna and the second antenna is less than a first isolation threshold includes:
performing communication in the first parallel mode when the isolation between the first antenna and the second antenna is less than the first isolation threshold and is greater than the second isolation threshold.

According to the short-distance communication method provided in this embodiment of this application, two isolation thresholds are designed. When the isolation between the first antenna and the second antenna is less than the first isolation threshold and is greater than the second isolation threshold, communication is performed in the first parallel mode, avoiding an interference problem possibly caused by communication performed in the first parallel mode when the isolation between the first antenna and the second antenna is too small, further improving the transmission performance.

Optionally, the determining that the electronic device needs to enter a parallel mode of Bluetooth communication and wireless fidelity Wi-Fi communication includes:
when a communication status of the electronic device meets a first preset condition, determining that the electronic device needs to enter the parallel mode, where the first preset condition includes any one of the following:
the electronic device performs the Wi-Fi communication by using the second antenna and is to perform the Bluetooth communication; or
the electronic device performs the Wi-Fi communication and the Bluetooth communication through time division by multiplexing the second antenna; or
the electronic device performs the Wi-Fi communication and the Bluetooth communication through time division by multiplexing the second antenna, and a priority of a currently performed Bluetooth service is lower than a priority of a to-be-performed Bluetooth service.

According to the short-distance communication method provided in this embodiment of this application, by determining the first preset condition, when the communication status of the electronic device meets the first preset condition, it is determined that the electronic device needs to enter the parallel mode. A common application scenario is considered, and applicability is relatively good.

Optionally, after the performing communication in a first parallel mode when isolation between the first antenna and the second antenna is less than a first isolation threshold, the method further includes:
when the communication status of the electronic device meets a second preset condition, determining to exit the first parallel mode; and
setting the operating bandwidth of the Wi-Fi communication to the second operating bandwidth.

According to the short-distance communication method provided in this embodiment of this application, when communication is performed in the first parallel mode, the operating bandwidth of the Wi-Fi communication is the first operating bandwidth (for example, 20 MHz). After it is determined to exit the first parallel mode, it means that the Bluetooth communication does not need to preempt resources or preempts a very small quantity of resources with the Wi-Fi communication, and transmission of the Wi-Fi communication is not affected. Therefore, to enable the Wi-Fi communication to benefit from a large bandwidth as much as possible, the operating bandwidth of the Wi-Fi communication is changed from the first operating bandwidth (for example, 20 MHz) to the second operating bandwidth (for example, 40 MHz), so that the continuously performed Wi-Fi communication can benefit from the large bandwidth.

Optionally, the second preset condition includes any one of the following:
the electronic device stops the Bluetooth communication; or
the electronic device performs communication in the first parallel mode, and the priority of the currently performed Bluetooth service is higher than the priority of the to-be-performed Bluetooth service.

According to the short-distance communication method provided in this embodiment of this application, by determining the second preset condition, when the communication status of the electronic device meets the second preset condition, it is determined that the electronic device needs to exit the first parallel mode. A common application scenario is considered, and applicability is relatively good.

Optionally, the method further includes:
determining the isolation between the first antenna and the second antenna based on configuration information, where the configuration information indicates isolation between antennas configured in the electronic device.

According to the short-distance communication method provided in this embodiment of this application, the isolation between the antennas can be determined conveniently and rapidly based on the configuration information configured in the electronic device, increasing a processing speed.

Optionally, the electronic device includes a Wi-Fi module and a first processing module, the Wi-Fi module is configured with the configuration information, and the method further includes:
receiving, by the first processing module, the configuration information sent by the Wi-Fi module; and
the determining the isolation between the first antenna and the second antenna based on configuration information includes:
determining, by the first processing module, the isolation between the first antenna and the second antenna based on the configuration information.

Optionally, the performing communication in a first parallel mode when isolation between the first antenna and the second antenna is less than a first isolation threshold includes:
when the isolation between the first antenna and the second antenna is less than the first isolation threshold, determining, by the first processing module, that an operation mode of the Bluetooth communication and the Wi-Fi communication is the first parallel mode;
sending, by the first processing module, first bandwidth information to the Wi-Fi module, where the first bandwidth information indicates the first operating bandwidth; and
setting, by the Wi-Fi module, the operating bandwidth of the Wi-Fi communication to the first operating bandwidth, so that the electronic device performs communication in the first parallel mode.

Optionally, the performing communication in a time division mode when isolation between the first antenna and the second antenna is less than a second isolation threshold includes:
when the isolation between the first antenna and the second antenna is less than the second isolation threshold, determining, by the first processing module, that an operation mode of the Bluetooth communication and the Wi-Fi communication is the time division mode;
sending, by the first processing module, second bandwidth information to the Wi-Fi module, where the second bandwidth information indicates the second operating bandwidth; and
maintaining, by the Wi-Fi module, the operating bandwidth of the Wi-Fi communication as the second operating bandwidth, so that the electronic device performs communication in the time division mode.

Optionally, the electronic device includes a Wi-Fi module and a first processing module, the first processing module is configured with the configuration information, and the method further includes:
receiving, by the Wi-Fi module, the configuration information sent by the first processing module; and
the determining the isolation between the first antenna and the second antenna based on configuration information includes:
   determining, by the Wi-Fi module, the isolation between the first antenna and the second antenna based on the configuration information.

Optionally, the performing communication in a first parallel mode when isolation between the first antenna and the second antenna is less than a first isolation threshold includes:
when the isolation between the first antenna and the second antenna is less than the first isolation threshold, determining, by the Wi-Fi module, that the operation mode of the Bluetooth communication and the Wi-Fi communication is the first parallel mode; and
setting, by the Wi-Fi module, the operating bandwidth of the Wi-Fi communication to the first operating bandwidth, so that the electronic device performs communication in the first parallel mode.

Optionally, the performing communication in a time division mode when isolation between the first antenna and the second antenna is less than a second isolation threshold includes:
when the isolation between the first antenna and the second antenna is less than the second isolation threshold, determining, by the Wi-Fi module, that the operation mode of the Bluetooth communication and the Wi-Fi communication is the time division mode; and
maintaining, by the Wi-Fi module, the operating bandwidth of the Wi-Fi communication as the second operating bandwidth, so that the electronic device performs communication in the time division mode.

Optionally, the first antenna is further used for cellular communication.

Because there are many cellular antennas in a cellular module in an existing mobile phone, Bluetooth is allowed to multiplex a cellular antenna, and the Bluetooth communication is performed by using a cellular antenna. Therefore, the Bluetooth communication and the Wi-Fi communication can operate in parallel without adding an antenna, that is, the electronic device can perform the Bluetooth communication and the Wi-Fi communication in parallel. This design not only reduces costs, but also does not need to additionally occupy space of the electronic device, and does not affect an appearance design and product stability of the electronic device.

Optionally, the first operating bandwidth is 20 MHz, and the second operating bandwidth is 40 MHz.

Optionally, the operating frequency band of the Wi-Fi communication and the Bluetooth communication is a 2.4 GHz operating frequency band.

According to a second aspect, a short-distance communication method is provided, applied to an electronic device, where the electronic device is configured with a first antenna and a second antenna, the first antenna is different from the second antenna, and the method includes:
determining whether a first Bluetooth service and a first router are a Bluetooth service and a router that are recorded in a whitelist, where the first Bluetooth service is a to-be-performed service or an ongoing service, and the first router is configured to provide a Wi-Fi network; and
when the first Bluetooth service and the first router are the Bluetooth service and the router that are recorded in the whitelist, searching the whitelist based on isolation between the first antenna and the second antenna, the first Bluetooth service, and the first router to determine a target operation mode of Bluetooth communication and Wi-Fi communication, where an operating frequency band of the Wi-Fi communication is the same as an operating frequency band of the Bluetooth communication.

The whitelist includes four types of content; the four types of content include: a plurality of Bluetooth services, a plurality of routers, a plurality of isolation ranges, and three operation modes; the four types of content form M combinations; each combination includes: one Bluetooth service, one router, one isolation range, and one operation mode; the Bluetooth service, the router, and the isolation range in each combination are used to determine a corresponding operation mode; and the target operation mode is any one of the three operation modes.

The three operation modes include: a time division mode, a first parallel mode, and a second parallel mode; the time division mode indicates that the Bluetooth communication and the Wi-Fi communication are performed through time division by multiplexing the second antenna, and an operating bandwidth of the Wi-Fi communication is a second operating bandwidth; the first parallel mode indicates that the Bluetooth communication is performed by using the first antenna and the Wi-Fi communication is performed by using the second antenna, and the operating bandwidth of the Wi-Fi communication is a first operating bandwidth; the second parallel mode indicates that the Bluetooth communication is performed by using the first antenna and the Wi-Fi communication is performed by using the second antenna, and the operating bandwidth of the Wi-Fi communication is the second operating bandwidth; and the second operating bandwidth is greater than the first operating bandwidth.

According to the short-distance communication method provided in this embodiment of this application, a whitelist is introduced. M combinations are formed in the whitelist. Each combination includes one Bluetooth service, one router, one isolation range, and one operation mode. The Bluetooth service, the router, and the isolation range in each combination are used to determine a corresponding operation mode. In this way, if the first Bluetooth service and the first router are content recorded in the whitelist, the electronic device can determine a corresponding target operation mode from the whitelist based on the first Bluetooth service, the first router, and the isolation between the first antenna and the second antenna. In this way, the target operation mode determined based on a plurality of dimensions (the router, the Bluetooth service, and the isolation) can reduce interference between the Wi-Fi communication and the Bluetooth communication as much as possible to maintain relatively good transmission performance, not only improving system flexibility, but also improving system stability. In addition, because a corresponding target operation mode can be found quickly based on content of the whitelist, a processing process can be effectively simplified, improving processing efficiency.

Optionally, before the determining whether a first Bluetooth service and a first router are a Bluetooth service and a router that are recorded in a whitelist, the method further includes:
determining that a communication status of the electronic device meets a first preset condition, where the first preset condition includes any one of the following:
the electronic device performs the Wi-Fi communication by using the second antenna and is to perform the Bluetooth communication; or
the electronic device performs the Wi-Fi communication and the Bluetooth communication through time division by multiplexing the second antenna; or
the electronic device performs the Wi-Fi communication and the Bluetooth communication through time division by multiplexing the second antenna, and a priority of a currently performed Bluetooth service is lower than a priority of a to-be-performed Bluetooth service.

According to the short-distance communication method provided in this embodiment of this application, by determining the first preset condition, when the communication status of the electronic device meets the first preset condition, whether the first Bluetooth service and the first router are the Bluetooth service and the router that are recorded in the whitelist is determined, avoiding invalid operations, and improving practicality. In addition, a common application scenario is considered in the first preset condition, and applicability is relatively good.

Optionally, the target operation mode is the first parallel mode, and the method further includes:
when the communication status of the electronic device meets a second preset condition, determining to exit the first parallel mode; and
setting the operating bandwidth of the Wi-Fi communication to the second operating bandwidth.

According to the short-distance communication method provided in this embodiment of this application, when communication is performed in the first parallel mode, the operating bandwidth of the Wi-Fi communication is the first operating bandwidth (for example, 20 MHz). After it is determined to exit the first parallel mode, it means that the Bluetooth communication does not need to preempt resources or preempts a very small quantity of resources with the Wi-Fi communication, and transmission of the Wi-Fi communication is not affected. Therefore, to enable the Wi-Fi communication to benefit from a large bandwidth as much as possible, the operating bandwidth of the Wi-Fi communication is changed from the first operating bandwidth (for example, 20 MHz) to the second operating bandwidth (for example, 40 MHz), so that the continuously performed Wi-Fi communication can benefit from the large bandwidth.

Optionally, the second preset condition includes any one of the following:
the electronic device stops the Bluetooth communication; or
the electronic device performs communication in the first parallel mode, and the priority of the currently performed Bluetooth service is higher than the priority of the to-be-performed Bluetooth service.

According to the short-distance communication method provided in this embodiment of this application, by determining the second preset condition, when the communication status of the electronic device meets the second preset condition, it is determined that the electronic device needs to exit the first parallel mode. A common application scenario is considered, and applicability is relatively good.

Optionally, the method further includes:
obtaining the whitelist from a server.

Optionally, the first operating bandwidth is 20 MHz, and the second operating bandwidth is 40 MHz.

According to a third aspect, a short-distance communication method is provided, applied to a chip, where the chip is configured in an electronic device, the electronic device is configured with a first antenna and a second antenna, the first antenna is different from the second antenna, and the method includes:
if the electronic device needs to enter a parallel mode of Bluetooth communication and wireless fidelity Wi-Fi communication and an operating bandwidth in which the electronic device currently performs the Wi-Fi communication by using the second antenna is a second operating bandwidth, when isolation between the first antenna and the second antenna is less than a first isolation threshold, controlling the electronic device to perform communication in a first parallel mode, where the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
if the electronic device needs to enter the parallel mode and the operating bandwidth in which the electronic device currently performs the Wi-Fi communication by using the second antenna is the second operating bandwidth, when the isolation between the first antenna and the second antenna is less than a second isolation threshold, controlling the electronic device to perform communication in a time division mode, where the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

The parallel mode indicates that the Bluetooth communication and the Wi-Fi communication are separately performed by using different antennas.

Optionally, the method further includes:
if the electronic device needs to enter the parallel mode and the operating bandwidth in which the electronic device currently performs the Wi-Fi communication by using the second antenna is the first operating bandwidth, when the isolation between the first antenna and the second antenna is greater than the first isolation threshold, controlling the electronic device to perform communication in a second parallel mode, where the second parallel mode indicates that the Bluetooth communication is performed by using the first antenna and the Wi-Fi communication is performed by using the second antenna, and the operating bandwidth of the Wi-Fi communication is the second operating bandwidth.

Optionally, the controlling the electronic device to perform communication in a first parallel mode includes:
if the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold and is greater than the second isolation threshold, controlling the electronic device to perform communication in the first parallel mode.

Optionally, the method further includes:
determining the isolation between the first antenna and the second antenna based on configuration information, where the configuration information indicates isolation between antennas configured in the electronic device.

Optionally, the chip includes a first processing module, the electronic device includes a Wi-Fi module, and the method further includes:
receiving, by the first processing module, the configuration information sent by the Wi-Fi module; and
the determining the isolation between the first antenna and the second antenna based on configuration information includes:
   determining, by the first processing module, the isolation between the first antenna and the second antenna based on the configuration information.

Optionally, the controlling the electronic device to perform communication in a first parallel mode includes:
if the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold, determining, by the first processing module, that an operation mode of the Bluetooth communication and the Wi-Fi communication is the first parallel mode; and
sending, by the first processing module, first bandwidth information to the Wi-Fi module, where the first bandwidth information indicates the first operating bandwidth, so that the Wi-Fi module sets the operating bandwidth of the Wi-Fi communication to the first operating bandwidth to control the electronic device to perform communication in the first parallel mode.

Optionally, the controlling the electronic device to perform communication in a time division mode includes:
if the electronic device needs to enter the parallel mode and the operating bandwidth in which the electronic device currently performs the Wi-Fi communication by using the second antenna is the second operating bandwidth, when the isolation between the first antenna and the second antenna is less than the second isolation threshold, determining, by the first processing module, that an operation mode of the Bluetooth communication and the Wi-Fi communication is the time division mode; and
sending, by the first processing module, second bandwidth information to the Wi-Fi module, where the second bandwidth information indicates the second operating bandwidth, so that the Wi-Fi module maintains the operating bandwidth of the Wi-Fi communication as the second operating bandwidth to control the electronic device to perform communication in the time division mode.

Optionally, the chip includes a Wi-Fi module, the electronic device includes a first processing module, and the method further includes:
receiving, by the Wi-Fi module, the configuration information sent by the first processing module; and
the determining the isolation between the first antenna and the second antenna based on configuration information includes:
   determining, by the Wi-Fi module, the isolation between the first antenna and the second antenna based on the configuration information.

Optionally, the controlling the electronic device to perform communication in a first parallel mode includes:
if the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold, determining, by the Wi-Fi module, that an operation mode of the Bluetooth communication and the Wi-Fi communication is the first parallel mode; and
setting, by the Wi-Fi module, the operating bandwidth of the Wi-Fi communication to the first operating bandwidth, so that the electronic device performs communication in the first parallel mode.

Optionally, the controlling the electronic device to perform communication in a time division mode includes:
if the electronic device needs to enter the parallel mode and the operating bandwidth in which the electronic device currently performs the Wi-Fi communication by using the second antenna is the second operating bandwidth, when the isolation between the first antenna and the second antenna is less than the second isolation threshold, determining, by the Wi-Fi module, that an operation mode of the Bluetooth communication and the Wi-Fi communication is the time division mode; and
maintaining, by the Wi-Fi module, the operating bandwidth of the Wi-Fi communication as the second operating bandwidth, so that the electronic device performs communication in the time division mode.

Optionally, the first operating bandwidth is 20 MHz, and the second operating bandwidth is 40 MHz.

According to a fourth aspect, an electronic device is provided. The electronic device is configured to perform the method according to the first aspect, the second aspect, or the third aspect Specifically, the electronic device may include a module configured to perform any possible implementation in the first aspect, the second aspect, or the third aspect.

According to a fifth aspect, an electronic device is provided, including a processor. The processor is coupled to a memory, and may be configured to execute instructions in the memory to implement the method according to any possible implementation in the first aspect, the second aspect, or the third aspect. Optionally, the electronic device further includes the memory. Optionally, the apparatus further includes a communication interface, and the processor is coupled to the communication interface.

According to a sixth aspect, a computer-readable storage medium is provided, storing a computer program. The computer program, when being executed by an apparatus, causes the apparatus to implement the method according to any possible implementation in the first aspect, the second aspect, or the third aspect.

According to a seventh aspect, a computer program product including instructions is provided. The instructions, when being executed by a computer, cause an apparatus to implement the method according to any possible implementation in the first aspect, the second aspect, or the third aspect.

According to an eighth aspect, a chip is provided, including: an input interface, an output interface, a processor, and a memory. The input interface, the output interface, the processor, and the memory are connected through an internal connection path. The processor is configured to execute code in the memory. When the code is executed, the processor is configured to perform the method according to any possible implementation in the first aspect, the second aspect, or the third aspect.

### BRIEF DESCRIPTION OF DRAWINGS

FIG. 1 is a schematic block diagram of an electronic device according to an embodiment of this application;
FIG. 2 is a schematic block diagram of a communication system according to an embodiment of this application;
FIG. 3 is a schematic block diagram of an electronic device when Wi-Fi and Bluetooth share an antenna according to an embodiment of this application;
FIG. 4 is a sequence diagram of Wi-Fi communication and Bluetooth communication when Wi-Fi and the Bluetooth share an antenna according to an embodiment of this application;
FIG. 5 is a schematic block diagram of an electronic device when Wi-Fi and Bluetooth independently use an antenna according to an embodiment of this application;
FIG. 6 is a schematic flowchart of a short-distance communication method according to an embodiment of this application;
FIG. 7 is a schematic flowchart of a process in which an electronic device connects a Bluetooth module and a first antenna according to an embodiment of this application;
FIG. 8 and FIG. 9 are respectively diagrams of states of components in an electronic device before and after switching according to an embodiment of this application;
FIG. 10 is another schematic flowchart of a short-distance communication method according to an embodiment of this application;
FIG. 11 is another example flowchart of a short-distance communication method according to an embodiment of this application;
FIG. 12 is another schematic flowchart of a short-distance communication method according to an embodiment of this application;
FIG. 13 is another schematic flowchart of a short-distance communication method according to an embodiment of this application;
FIG. 14 is another schematic flowchart of a short-distance communication method according to an embodiment of this application;
FIG. 15 is another schematic flowchart of a short-distance communication method according to an embodiment of this application;
FIG. 16 is still another schematic flowchart of a short-distance communication method according to an embodiment of this application;
FIG. 17 is a schematic block diagram of an electronic device according to an embodiment of this application; and
FIG. 18 is a diagram of a structure of an electronic device according to an embodiment of this application.

### DESCRIPTION OF EMBODIMENTS

The following describes technical solutions in this application with reference to the accompanying drawings.

The technical solutions in embodiments of this application are applied to various electronic devices that can support Wi-Fi and Bluetooth. For example, the electronic devices may be a mobile phone, a smart watch, a smart band, a tablet computer, a desktop computer, a laptop computer, and the like. Specific types of the electronic devices are not limited in embodiments of this application.

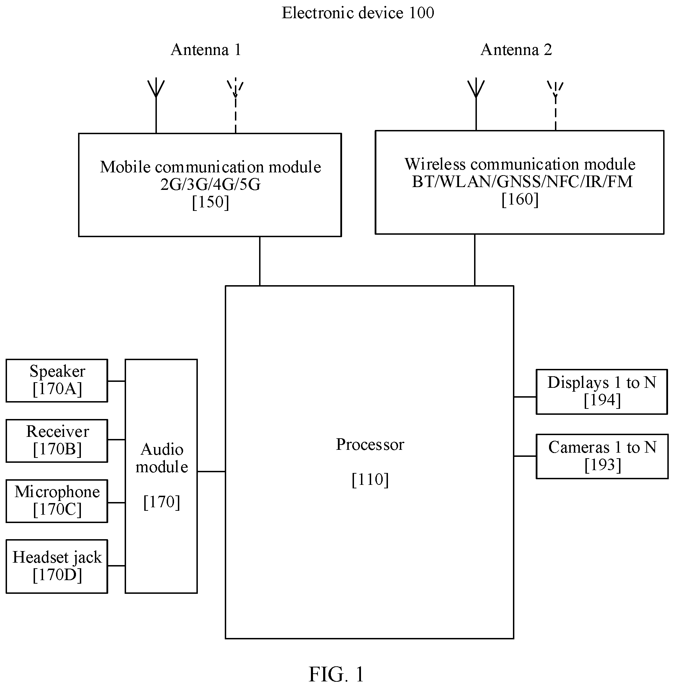

FIG. 1 is an example block diagram of an electronic device 100 according to an embodiment of this application. The electronic device 100 may include a processor 110, an antenna 1, an antenna 2, a mobile communication module 150, a wireless communication module 160, an audio module 170, a speaker 170A, a receiver 170B, a microphone 170C, and a headset jack 170D. Optionally, the electronic device 100 may further include components such as an external memory interface, an internal memory, a universal serial bus (universal serial bus, USB) interface, a charging management module, a power management module, and a battery.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or a different component arrangement may be used. The components shown in the figure may be implemented by hardware, software, or a combination of software and hardware.

The processor 110 may include one or more processing modules. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing modules may be separate devices or may be integrated into one or more processors.

The controller may be a nerve center and a command center of the electronic device 100. The controller may generate an operation control signal based on instruction operation code and a time sequence signal to complete control of instruction fetching and instruction execution.

The processor 110 may further be provided with a memory, configured to store instructions and data. In some embodiments, the memory in the processor 110 is a cache memory. The memory may store instructions or data recently used or repeatedly used by the processor 110. If the processor 110 needs to use the instructions or the data again, the processor 110 may directly invoke the instructions or the data from the memory, avoiding repeated access, reducing waiting time of the processor 110, and improving system efficiency.

In this embodiment of this application, when an operating frequency band of Wi-Fi communication coincides with an operating frequency band of Bluetooth communication (for example, the operating frequency band of both the Wi-Fi communication and the Bluetooth communication is 2.4 GHz), the processor 110 may flexibly determine an operation mode of the Wi-Fi communication and the Bluetooth communication based on an actual requirement. For example, in some scenarios, the Wi-Fi communication and the Bluetooth communication operate in a time division manner; and in some other scenarios, the Bluetooth communication and the Wi-Fi communication operate by using different antennas, and an operating bandwidth of the Wi-Fi communication is 40 MHz or 20 MHz.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device.

In this embodiment of this application, the mobile communication module may also be referred to as a cellular module, and the mobile communication module may be alternatively described as a cellular module.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution for wireless communication including a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In some embodiments, at least some functional modules of the wireless communication module 160 may be disposed in the processor 110. Embodiments of this application mainly relate to Bluetooth communication and Wi-Fi communication, which are described below in detail.

In some embodiments, the antenna 1 and the mobile communication module 150 of the electronic device 100 are coupled, and the antenna 2 and the wireless communication module 160 of the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation system (satellite based augmentation systems, SBAS).

In some embodiments, a Bluetooth module and a Wi-Fi module of the wireless communications module 160 may share one antenna to implement the Bluetooth communication and the Wi-Fi communication in a time division and multiplexing manner.

In some embodiments, the Bluetooth module in the wireless communication module 160 and the mobile communication module 150 share one antenna to simultaneously implement the Bluetooth communication and the Wi-Fi communication.

The electronic device 100 implements a display function through the GPU, the display 194, the application processor, and the like. The GPU is a microprocessor for image processing, and is connected to the display 194 and the application processor. The GPU is configured to perform mathematical and geometric computation and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transmission mode between neurons in a human brain, and may further continuously perform self-learning. Applications such as intelligent cognition of the electronic device 100 may be implemented through the NPU, for example, image recognition, facial recognition, speech recognition, and text understanding.

The electronic device 100 may implement an audio function through the audio module 170, the speaker 170A, the receiver 170B, the microphone 170C, the headset jack 170D, the application processor, and the like, for example, music playback and recording.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100 to collect a sound signal and implement a noise reduction function. In some other embodiments, three, four, or more microphones 170C may alternatively be disposed in the electronic device 100 to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile electronic device platform (open mobile terminal platform, OMTP) standard interface or cellular telecommunications industry association of the USA (cellular telecommunications industry association of the USA, CTIA) standard interface.

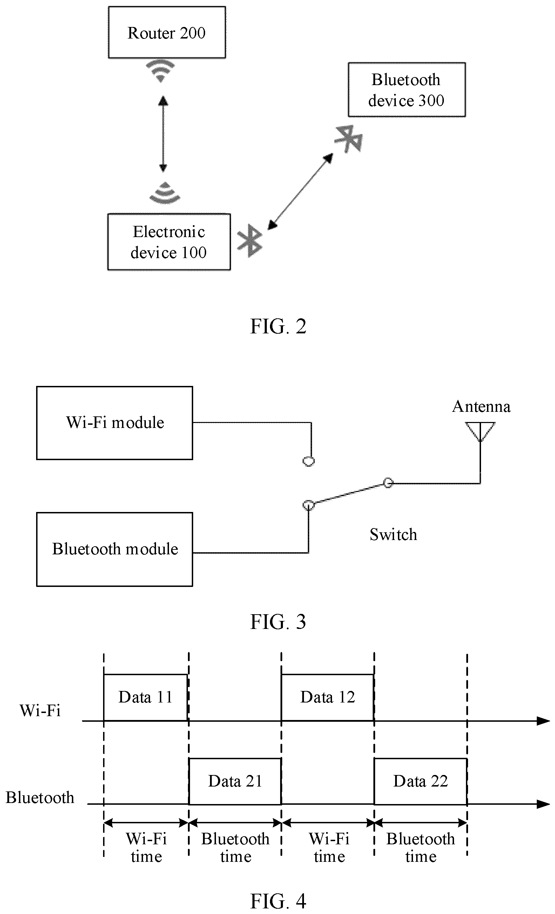

FIG. 2 shows a communication system used in an embodiment of this application. Refer to FIG. 2. The communication system includes an electronic device 100, a router 200, and a Bluetooth device 300. The electronic device 100 is connected to the router 200 via a Wi-Fi network. In addition, the electronic device 100 is connected to the Bluetooth device 300 in a Bluetooth connection manner. The Bluetooth device 300 may be any device that can implement a Bluetooth connection. For example, the Bluetooth device 300 may be a device such as a mobile phone, a smart watch, a smart band, a tablet computer, a desktop computer, a laptop computer, a Bluetooth handle, a Bluetooth earphone, a Bluetooth sound box, a Bluetooth desk lamp, or Bluetooth augmented reality (augmented reality, AR) glasses.

An example in which the electronic device 100 is a mobile phone and the Bluetooth device 300 is a Bluetooth earphone or a Bluetooth handle is used. In a possible scenario, the Bluetooth device 300 is a Bluetooth earphone, and a user is wearing the Bluetooth earphone to perform a video call through Wi-Fi. In this video call scenario, a mobile phone is receiving and sending audio video data through Wi-Fi, and the mobile phone needs to transmit audio data to the Bluetooth earphone. In another possible scenario, the Bluetooth device 300 is a Bluetooth handle, and a user is playing a game via a Wi-Fi network. In this game scenario, control data of the Bluetooth handle needs to be transmitted to a mobile phone through Bluetooth, and game picture data needs to be transmitted to the mobile phone through Wi-Fi.

FIG. 3 is a schematic block diagram of an electronic device when Wi-Fi and Bluetooth share an antenna according to an embodiment of this application. Refer to FIG. 3. A Bluetooth module and a Wi-Fi module multiplex an antenna through time division by using a switch. When a path of the switch is connected to the Bluetooth module, the antenna receives and sends a Bluetooth signal. When the path of the switch is connected to the Wi-Fi module, the antenna receives and sends a Wi-Fi signal.

FIG. 4 is a sequence diagram of Wi-Fi communication and Bluetooth communication when Wi-Fi and the Bluetooth share an antenna according to an embodiment of this application. Refer to FIG. 4. The Bluetooth or the Wi-Fi performs data transmission only in a respective operating time period, and does not perform data transmission in another time period. That is, the Bluetooth and the Wi-Fi through time division. In a same time period, only Bluetooth data or Wi-Fi data can be transmitted, and the Bluetooth and the Wi-Fi alternately occupy a time-domain resource.

The example of the communication system shown in FIG. 2 is still used. When the Wi-Fi and the Bluetooth share an antenna, in a video call or game scenario, audio data and video data are both transmitted at a high speed, and the Bluetooth communication and the Wi-Fi communication both have relatively high requirements on transmission service quality and especially have relatively high requirements on real-time performance. In the video call scenario, when a mobile phone is receiving audio and video data through Wi-Fi and the mobile phone needs to transmit data to a Bluetooth headset, receiving and sending of the audio and video data in the Wi-Fi is interrupted, and a user may feel that a sound stutters or a picture freezes. In the game scenario, control data of a handle needs to be transmitted to the mobile phone through Bluetooth, and game picture data is transmitted to the mobile phone through Wi-Fi. Wi-Fi transmission between the mobile phone and a router collides with Bluetooth transmission between the handle and the mobile phone. From the perspective of a user, frame freezing occurs on the game.

It can be learned that a requirement of a user on wireless performance cannot be met by using an existing antenna layout, because if the Wi-Fi and the Bluetooth multiplex the antenna through time division, a problem of antenna resource preemption exists.

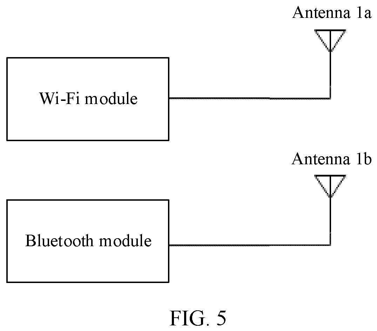

Based on this, a related technology proposes that the Bluetooth is allowed to use an antenna independent of a Wi-Fi antenna. In this way, the electronic device may perform Bluetooth communication and Wi-Fi communication by using different antennas. Refer to FIG. 5. A Wi-Fi module performs Wi-Fi communication by using an antenna 1a, and a Bluetooth module performs Bluetooth communication by using an antenna 1b. In this way, because the Bluetooth communication and the Wi-Fi communication do not need to be performed through time division, time-domain resources that can be occupied are greatly increased, helping resolve a problem of resource preemption.

In some embodiments, if space of the electronic device is sufficient, an independent antenna may be disposed for Bluetooth. The antenna is used only by the Bluetooth, and is dedicated to the Bluetooth communication.

In some other embodiments, because there are many cellular antennas in a cellular module in an existing mobile phone, the Bluetooth is allowed to multiplex the cellular antennas, and the Bluetooth communication is performed by using the cellular antennas. Therefore, the Bluetooth communication and the Wi-Fi communication can operate in parallel without adding an antenna. That is, the electronic device can perform the Bluetooth communication and the Wi-Fi communication in parallel. This design not only reduces costs, but also does not need to additionally occupy space of the electronic device, and does not affect an appearance design and product stability of the electronic device.

However, because an operating frequency band of the Bluetooth communication is 2.4 GHz, when the electronic device performs the Wi-Fi communication and the Bluetooth communication by using different antennas and the Wi-Fi communication also operates in the 2.4 GHz operating frequency band, the operating frequency band of the Wi-Fi communication mostly coincides with an operating frequency band of the Bluetooth communication. In addition, when an operating bandwidth of the Wi-Fi communication in the 2.4 GHz operating frequency band is 40 MHz, if an isolation protection bandwidth is relatively large, there are not many frequencies available for the Bluetooth communication, affecting transmission performance of the Bluetooth communication. Moreover, when the Wi-Fi communication and the Bluetooth communication are simultaneously performed by using different antennas, mutual interference is caused, affected transmission performance of the Bluetooth communication and the Wi-Fi. Especially in a scenario with a high requirement on real-time performance, such as a video call scenario or a game scenario, user experience is severely affected.

Based on this, this embodiment of this application proposes that when the operating frequency band of the Wi-Fi communication coincides with the operating frequency band of the Bluetooth communication (for example, the operating frequency band of both the Wi-Fi communication and the Bluetooth communication is 2.4 GHz), an operation mode of the Wi-Fi communication and the Bluetooth communication is flexibly determined based on an actual requirement. For example, in some scenarios, the Wi-Fi communication and the Bluetooth communication are performed through time division by multiplexing an antenna; and in some other scenarios, the Bluetooth communication and the Wi-Fi communication are performed in parallel by using different antennas, and the operating bandwidth of the Wi-Fi communication is 40 MHz or 20 MHz.

It should be noted that the 2.4 GHz mentioned in this embodiment of this application refers to an operating frequency band, and a bandwidth range is approximately 2.4 GHz to 2.48 GHz. Currently, both the Bluetooth communication and the Wi-Fi communication can operate in the 2.4 GHz operating frequency band.

In addition, this embodiment of this application further defines three operation modes of the Wi-Fi communication and the Bluetooth communication.

A time division mode: In the time division mode of the Bluetooth communication and the Wi-Fi communication, the operating bandwidth of the Wi-Fi communication is not limited. For example, the operating bandwidth of the Wi-Fi communication may be 40 MHz or 20 MHz. In this operation mode, the electronic device performs the Wi-Fi communication and the Bluetooth communication through time division by multiplexing an antenna, or the electronic device may perform the Wi-Fi communication and the Bluetooth communication by using different antennas.

A first parallel mode: In this parallel mode of the Wi-Fi communication and the Bluetooth communication, the operating bandwidth of the Wi-Fi communication is a first operating bandwidth. In this operation mode, the electronic device performs the Wi-Fi communication and the Bluetooth communication in parallel by using different antennas. For example, the first operating bandwidth is 20 MHz.

A second parallel mode: In this parallel mode of the Wi-Fi communication and the Bluetooth communication, the operating bandwidth of the Wi-Fi communication is a second operating bandwidth. In this operation mode, the electronic device performs the Wi-Fi communication and the Bluetooth communication in parallel by using different antennas. For example, the second operating bandwidth is 40 MHz.

In the foregoing parallel modes, generally, the operating bandwidth of the Bluetooth communication includes a bandwidth in the operating frequency band other than the operating bandwidth (20 MHz or 40 MHz) of the Wi-Fi communication. However, in a special case, the operating bandwidth of the Bluetooth communication also includes a small operating bandwidth of the Wi-Fi communication.

It should be noted that the operating bandwidth of the Wi-Fi communication in the three determined operation modes indicates a maximum operating bandwidth that can be used by the Wi-Fi communication. Subsequently, an operating bandwidth actually used to perform the Wi-Fi communication does not necessarily be the maximum operating bandwidth that can be used by the Wi-Fi communication, and a specific situation is related to a configuration of a router. If a bandwidth supported by the router includes the maximum operating bandwidth that can be used by the Wi-Fi communication, the operating bandwidth actually used to perform the Wi-Fi communication may be the maximum operating bandwidth. If a bandwidth supported by the router is less than the maximum operating bandwidth, the operating bandwidth actually used to perform the Wi-Fi communication is less than the maximum operating bandwidth. For example, if the electronic device determines that the operating bandwidth of the Wi-Fi communication is 40 MHz, but the router supports only a 20 MHz operating bandwidth, the operating bandwidth actually used to perform the Wi-Fi communication is 20 MHz. For another example, if the electronic device determines that the maximum operating bandwidth of the Wi-Fi communication is 40 MHz, and the router also supports the 40 MHz operating bandwidth, the operating bandwidth actually used to perform the Wi-Fi communication may be 40 MHz.

It should be understood that although this embodiment of this application is provided by using the 2.4 GHz operating frequency band and the 40 MHz or 20 MHz operating bandwidth, this embodiment of this application should not be limited thereto. For example, the operating frequency bands of the Wi-Fi communication and the Bluetooth communication are not necessarily limited to 2.4 GHz. For a possible future technology, the operating frequency bands of the Wi-Fi communication and the Bluetooth communication need to coincide with each other. For another example, the operating bandwidth of the Wi-Fi communication is not necessarily limited to 40 MHz or 20 MHz. For the possible future technology, the operating bandwidth of the Wi-Fi communication may further include a plurality of possible bandwidths (for example, 30 MHz and 50 MHz).

For ease of description, the following still uses an example of the 2.4 GHz operating frequency band and an example in which the operating bandwidth of the Wi-Fi communication includes 40 MHz and 20 MHz to describe embodiments of this application in detail.

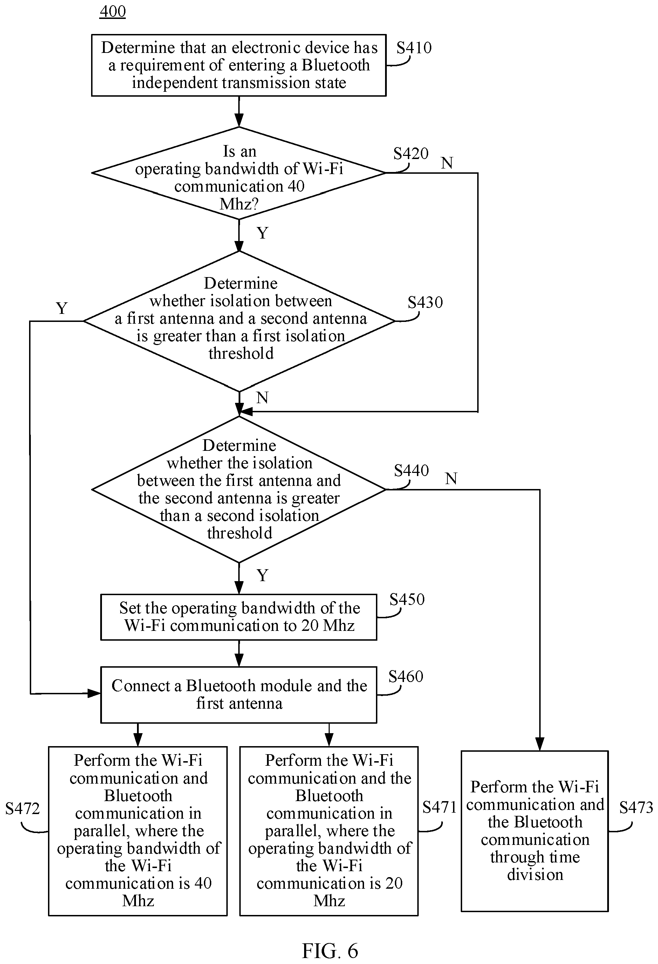

FIG. 6 is a schematic flowchart of a short-distance communication method 400 according to an embodiment of this application. The method 400 may be performed by an electronic device or a processor or a chip in an electronic device. For ease of description, the method 400 is described in detail by using the electronic device as an example.

In step S410, the electronic device determines that the electronic device has a requirement of entering a Bluetooth independent transmission state.

The Bluetooth independent transmission state indicates that the electronic device performs Bluetooth communication by using an antenna different from that used by Wi-Fi communication. If the electronic device may be allowed, based on an actual situation, to enter the Bluetooth independent transmission state, an operation mode of the electronic device is a parallel mode of the Wi-Fi communication and the Bluetooth communication, and the parallel mode may be the first parallel mode or the second parallel mode described above. This is described in detail below.

In this step, the electronic device may determine, based on different scenarios, that the electronic device has the requirement of entering the Bluetooth independent transmission state.

In some embodiments, the electronic device is currently performing the Wi-Fi communication but not performing the Bluetooth communication, and when needing to perform the Bluetooth communication, determines that the electronic device has the requirement of entering the Bluetooth independent transmission state.

In some other embodiments, the electronic device is currently performing the Bluetooth communication and the Wi-Fi communication through time division. For example, in this embodiment, transmission performance of the electronic device is not very good. Therefore, to attempt to obtain better transmission performance, the electronic device determines that the electronic device has the requirement of entering the Bluetooth independent transmission state.

In some other embodiments, when the electronic device is currently performing the Wi-Fi communication and the Bluetooth communication through time division, and a priority of a currently performed Bluetooth service (marked as a Bluetooth service A) is lower than a priority of a to-be-performed Bluetooth service (marked as a Bluetooth service B), the electronic device determines that the electronic device has the requirement of entering the Bluetooth independent transmission state.

It should be understood that Bluetooth services may be various types of services. For example, the Bluetooth service may be any type of the following services: a service in which the electronic device scans a Bluetooth device, a service in which the electronic device communicates with the Bluetooth device but does not transmit Bluetooth data, and a service in which the electronic device transmits Bluetooth data with the Bluetooth device. The Bluetooth data may be in any one of the following formats: sub-band coding (sub-band coding, SBC), advanced audio coding (advanced audio coding, AAC), APTX, LDAC, or low-latency high-definition Bluetooth codec (low-latency hi-definition audio codec, LHDC).

In an example, the priority of the Bluetooth service may be defined based on a bit rate of the Bluetooth data. A larger bit rate of the Bluetooth data indicates a higher priority of the Bluetooth service, and a smaller bit rate of the Bluetooth data indicates a smaller priority of the Bluetooth service. For example, using the SBC format, the AAC format, the APTX format, the LDAC format, and the LHDC format of the Bluetooth data as examples, in an order of arrangement from the SBC format to the LHDC format, bit rates of the Bluetooth data sequentially increase, and priorities of the Bluetooth services sequentially increase, to be specific, the bit rate of the SBC format is the lowest, the corresponding priority of the Bluetooth service is the lowest, the bit rate of the LHDC format is the highest, and the corresponding priority of the Bluetooth service is the highest.

It can be understood that in this embodiment, when a priority of a Bluetooth service is relatively low, the Bluetooth communication does not have high requirements on a speed rate and real-time performance, and an impact of the Bluetooth communication on the Wi-Fi communication is not large. Therefore, the electronic device can perform the Bluetooth communication and the Wi-Fi communication through time division. When the priority of the Bluetooth service increases, the requirements of the Bluetooth communication on the speed rate and the real-time performance also become higher. Therefore, ideally, the Bluetooth communication and the Wi-Fi communication can be performed in parallel. In this way, the electronic device has the requirement of entering the Bluetooth independent transmission state.

For example, the Bluetooth service A may be a service in which the electronic device maintains a communication connection with the Bluetooth device but does not transmit Bluetooth data. A Bluetooth service B may be a service in which the electronic device transmits Bluetooth data with the Bluetooth device. The Bluetooth data may be data in various formats. For the formats of the Bluetooth data, refer to the foregoing related descriptions. For another example, the Bluetooth service A is Bluetooth data in a format A, and the Bluetooth service B is Bluetooth data in a format B. For example, the Bluetooth data in the format A may be Bluetooth data in the SBC, AAC, or APTX format, and the Bluetooth data in the format B may be Bluetooth data in the LDAC format.

It should be understood that the foregoing examples are merely exemplary descriptions. The Bluetooth service A and the Bluetooth service B may be services in any form, provided that a priority of the Bluetooth service B is higher than a priority of the Bluetooth service A.

In step S420, the electronic device determines whether the operating bandwidth of the Wi-Fi communication is 40 MHz.

If the electronic device determines that the operating bandwidth of the Wi-Fi communication is 40 MHz, the electronic device performs step S430.

If the electronic device determines that the operating bandwidth of the Wi-Fi communication is not 40 MHz, it means that the operating bandwidth of the Wi-Fi communication is 20 MHz, and whether isolation between antennas meets a second isolation threshold related to the 20 MHz bandwidth may be further determined. Therefore, the electronic device performs step S440.

It should be understood that the operating bandwidth of the Wi-Fi communication described herein represents the current operating bandwidth of the Wi-Fi communication, and is a bandwidth actually used by the electronic device to currently perform the Wi-Fi communication.

In step S430, the electronic device determines whether isolation between a first antenna and a second antenna is greater than a first isolation threshold.

The first antenna is an antenna that is determined by the electronic device and that is used for the Bluetooth communication, and includes one more antennas. The second antenna is an antenna used for the Wi-Fi communication, and includes one more antennas.

It should be understood that the first isolation threshold is related to the 40 MHz operating bandwidth of the Wi-Fi communication.

If the electronic device determines that the isolation between the first antenna and the second antenna is greater than the first isolation threshold, it means that in the first isolation threshold which is a threshold of a large value, the isolation between the first antenna and the second antenna is large enough, and the requirement of the second parallel mode can be met, to be specific, a requirement that the electronic device performs the Wi-Fi communication and the Bluetooth communication by using different antennas and a requirement that the operating bandwidth of the Wi-Fi communication is 40 MHz are met. In this way, interference to transmission of the two types of communication is not large, or interference is within an acceptable range. Therefore, when the electronic device determines that the operation mode is the second parallel mode, the electronic device may perform step S460 and step S472.

If the electronic device determines that the isolation between the first antenna and the second antenna is less than or equal to the first isolation threshold, it indicates that in the first isolation threshold which is a threshold of a large value, the isolation between the first antenna and the second antenna is still not large enough, and a requirement of the second parallel mode cannot be met. Therefore, the electronic device performs step S440.

It should be understood that before performing step S430, the electronic device has determined the first antenna.

In some embodiments, the first antenna is a cellular antenna. Because the cellular communication and the Bluetooth communication share an antenna, and the electronic device includes a plurality of cellular antennas, the first antenna may be determined in the plurality of cellular antennas based on an idleness degree of the cellular communication and isolation between the plurality of cellular antennas and the second antenna.

In an example, when the cellular communication is not busy, the electronic device may determine, as the first antenna, an antenna, in the plurality of cellular antennas, that has largest isolation with the second antenna.

In another example, when the cellular communication is not busy, if N antennas in the plurality of cellular antennas all meet the isolation requirement, to be specific, isolation between each of the N antennas and the second antenna is greater than a preset value, the electronic device may alternatively use the N antennas, in the plurality of cellular antennas, that meet the isolation requirement as the first antennas, where N is greater than 1. For example, when N = 2, if isolation two cellular antennas of the electronic device and the second antenna meets the isolation requirement, the two cellular antennas may be used as the first antennas.

In some other embodiments, the first antenna is an antenna used only by the Bluetooth (briefly referred to as a Bluetooth antenna).

If the electronic device includes only one Bluetooth antenna, the first antenna is the antenna.

If the electronic device includes a plurality of Bluetooth antennas, the electronic device may determine the first antenna in the plurality of Bluetooth antennas based on isolation between the plurality of Bluetooth antennas and the second antenna.

In an example, the electronic device may determine, as the first antenna, an antenna, in the plurality of Bluetooth antennas, that has largest isolation with the second antenna.

In another example, the electronic device may use, as the first antennas, N antennas, in the plurality of Bluetooth antennas, that meet the isolation requirement.

It should be understood that the foregoing example manners for determining the first antenna are merely exemplary descriptions, and any manner that can be used to determine the first antenna is feasible. This is not limited in this embodiment of this application.

In step S440, when determining that the isolation between the first antenna and the second antenna is less than or equal to the first isolation threshold, the electronic device determines whether the isolation between the first antenna and the second antenna is greater than the second isolation threshold.

The second isolation threshold is less than the first isolation threshold, and the second isolation threshold is related to the 20 MHz operating bandwidth of the Wi-Fi communication.

If the electronic device determines that the isolation between the first antenna and the second antenna is greater than the second isolation threshold, it means that in the second isolation threshold which is a threshold of a small value, the isolation between the first antenna and the second antenna is relatively large, and the requirement of the first parallel mode can be met, to be specific, the requirement that the Wi-Fi communication and the Bluetooth communication are performed in parallel by using different antennas and the requirement that the operating bandwidth of the Wi-Fi communication is 20 MHz are met. In this way, interference to the two types of communication is not large, or interference is within an acceptable range. Therefore, when the electronic device determines that the operation mode is the first parallel mode, the electronic device may perform step S450, step S460, and step S471.

It can be understood that when isolation between antennas is relatively small, relatively large interference occurs in a transmission process. Therefore, the operating bandwidth of the Wi-Fi communication is reduced, and a suitable bandwidth can still be provided for the Bluetooth communication when a isolation protection bandwidth is relatively large, effectively reducing the interference.

If the electronic device determines that the isolation between the first antenna and the second antenna is less than or equal to the second isolation threshold, it means that in the second isolation threshold which is a threshold of a small value, the isolation between the first antenna and the second antenna is still very small, and the requirement that the Wi-Fi communication and the Bluetooth communication are performed in parallel by using different antennas and the requirement that the operating bandwidth of the Wi-Fi communication is 20 MHz cannot be met. Therefore, the electronic device determines that the operation mode is a time division mode, and the electronic device may perform step S473.

In step S450, when determining that the isolation between the first antenna and the second antenna is greater than the second isolation, the electronic device sets the operating bandwidth of the Wi-Fi communication to 20 MHz.

If the operating bandwidth of the Wi-Fi communication determined in step S420 is 20 MHz, the electronic device still keeps the operating bandwidth of the Wi-Fi communication in 20 MHz. In this case, the electronic device does not need to perform step S450, and directly performs step S460.

If the operating bandwidth of the Wi-Fi communication determined in step S420 is 40 MHz, the electronic device performs step S450, and changes the operating bandwidth of the Wi-Fi communication from 40 MHz to 20 MHz.

It should be understood that the operating bandwidth of the Wi-Fi communication set in this step is the maximum bandwidth that can be used by the Wi-Fi communication.

In step S460, the electronic device connects the Bluetooth module and the first antenna.

In this embodiment of this application, based on different scenarios, a manner in which the electronic device connects the Bluetooth module and the first antenna varies.

In some embodiments, if the electronic device is currently performing the Bluetooth communication and the Wi-Fi communication through time division by using the second antenna, or if the electronic device is currently performing the Wi-Fi communication but is not performing the Bluetooth communication, and the Bluetooth module is connected to the second antenna by default, the electronic device connects the Bluetooth module and the first antenna, and disconnects the Bluetooth module from the second antenna. Further, if the first antenna is a cellular antenna, when connecting the Bluetooth module and the first antenna, the electronic device disconnects the cellular module from the first antenna.

In another embodiment, if the electronic device is currently performing the Wi-Fi communication but is not performing the Bluetooth communication, and the Bluetooth module is connected to another antenna other than the first antenna and the second antenna by default, the electronic device connects the Bluetooth module and the first antenna, and disconnects the Bluetooth module from another antenna. Further, if the another antenna is a cellular antenna, when connecting the Bluetooth module and the first antenna, the electronic device disconnects the cellular module from the another antenna.

Certainly, in another embodiment, if the electronic device is currently performing the Wi-Fi communication but is not performing the Bluetooth communication, and the Bluetooth module is connected to the first antenna by default, the electronic device does not need to perform step S460, and may directly perform step S471 or step S472.

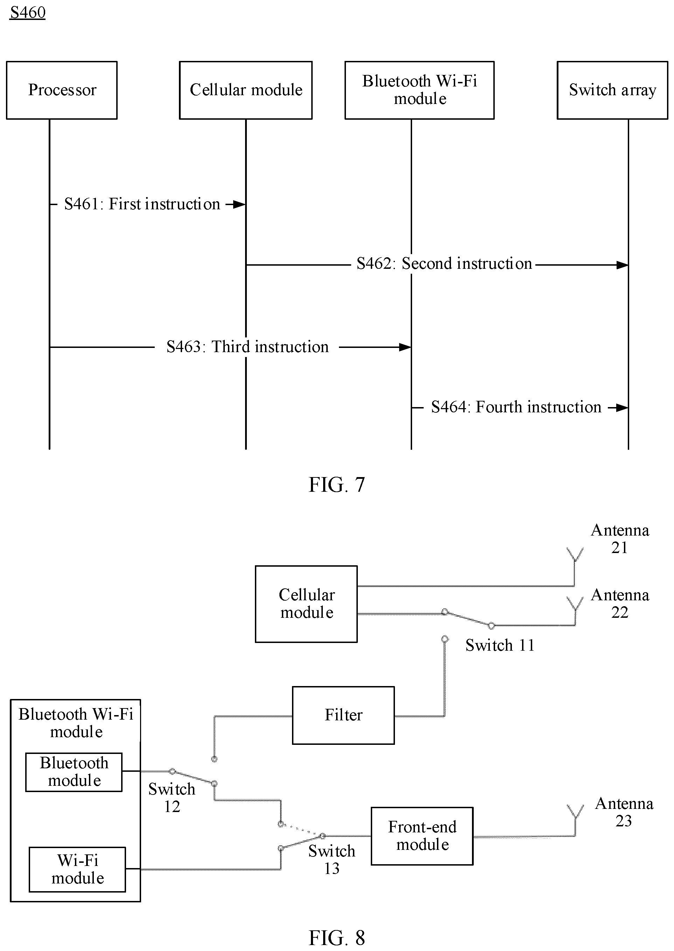

For ease of description, an embodiment in which the Bluetooth module is connected to the second antenna and the first antenna is a cellular antenna is used as an example. With reference to FIG. 7 and FIG. 8, a process of step S460 is described in detail through interactions between components in the electronic device. For another embodiment, refer to the related descriptions below. Details are not described again.

FIG. 7 is a schematic flowchart of a process in which an electronic device connects a Bluetooth module and a first antenna according to an embodiment of this application. The method is a specific description of step S460 in the method 400.

Refer to FIG. 7. The electronic device includes a processor, a cellular module, a Bluetooth Wi-Fi module, and a switch array. For example, the processor may be an AP. For example, the cellular module may include a modem or a radio frequency integrated circuit, and may further include a cellular front-end module. The Bluetooth Wi-Fi module includes a Bluetooth module and a Wi-Fi module, which respectively perform Bluetooth communication and Wi-Fi communication. The switch array is configured to connect to and switch an antenna corresponding to each module. It should be understood that the cellular module, the Bluetooth module, and the Wi-Fi module may belong to one chip, or may belong to different chips. Herein, an example in which the Bluetooth module and the Wi-Fi module are integrated into one chip is used for description.

In step S461, the processor generates a first instruction and sends the first instruction to the cellular module to instruct the cellular module to stop cellular communication on a first antenna.

In step S462, the cellular module generates a second instruction, and sends the second instruction to the switch array to instruct the switch array to connect a path from the first antenna to the Bluetooth Wi-Fi module.

In step S463, the processor generates a third instruction, and sends the third instruction to the Bluetooth Wi-Fi module to instruct the Bluetooth Wi-Fi module to switch to a Bluetooth independent transmission state, so that the Bluetooth Wi-Fi module changes configurations such as internal software, hardware, and an algorithm to the Bluetooth independent transmission state.

In step S464, the Bluetooth Wi-Fi module generates a fourth instruction, and sends the fourth instruction to the switch array to instruct the switch array to connect a path from the Bluetooth module to the first antenna in the Bluetooth Wi-Fi module. It can be understood that, in step S462 and step S464, the switch array may alternatively be controlled by the processor.

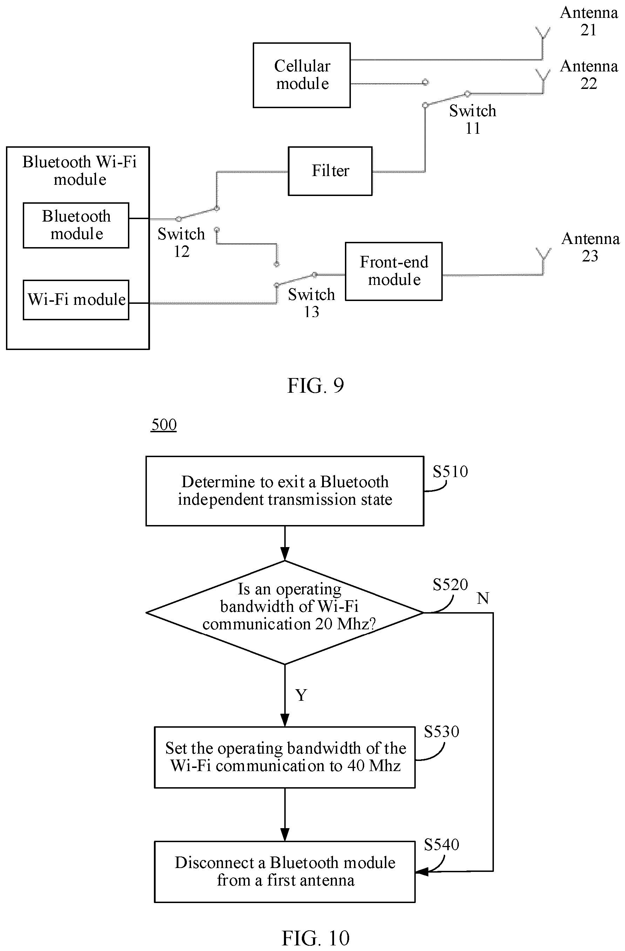

FIG. 8 and FIG. 9 are respectively diagrams of states of components in an electronic device before and after switching according to an embodiment of this application. Initial states of the internal components of the electronic device before an antenna is switched is shown in FIG. 8. Refer to FIG. 8. The electronic device includes a Bluetooth Wi-Fi module, a cellular module, a front-end module, a filter, a switch 11, a switch 12, a switch 13, an antenna 21, an antenna 22, and an antenna 23. The switch 13 is configured to perform Bluetooth communication and Wi-Fi communication through time division by multiplexing the antenna 23. The switch 13 may be located inside the front-end module, or may be located outside the front-end module. The antenna 21 may be one or more cellular antennas that are not selected as the first antenna, and the antenna 22 is a cellular antenna that is determined by the electronic device and that is used to perform the Bluetooth communication, namely, the first antenna.

It can be learned from the connection directions of the switch 11 and the switch 12 in FIG. 8 that in an initial state, the cellular module performs cellular communication by using the antenna 21 and the antenna 22, and the Bluetooth communication and the Wi-Fi communication multiplex the antenna 23 through time division by using the switch 13. When step S462 is performed, the switch 11 connects a path to the filter and the Bluetooth Wi-Fi module, and disconnects a path to the cellular module. When step S464 is performed, the switch 12 connects a path to the antenna 22, and disconnects a path to the antenna 23. The switch 13 stops the time division multiplexing switching. Therefore, the internal state of the electronic device is switched from FIG. 8 to FIG. 9.

It should be understood that the foregoing example process of connecting the Bluetooth module and the first antenna is merely an exemplary description, and should not be construed as a limitation to embodiments of this application. Any other manner shall fall within the protection scope of embodiments of this application.

For ease of description, it is assumed that the router supports bandwidths of 20Mhz and 40Mhz. After the electronic device determines the final operation mode, an operating bandwidth actually used to perform the Wi-Fi communication is the same as an operating bandwidth in the determined operation mode. In this case, the electronic device may perform step S471, step S472, or step S473.

In step S471, the electronic device performs the Bluetooth communication and the Wi-Fi communication in parallel by using different antennas, and the operating bandwidth of the Wi-Fi communication is 20 MHz.

In this step, the electronic device performs the Bluetooth communication by using the first antenna and performs the Wi-Fi communication by using the second antenna, and the operating bandwidth of the Wi-Fi communication is 20 MHz.

It should be understood that the operation mode of the Wi-Fi communication and the Bluetooth communication in this step is the first parallel mode in the foregoing description.

With reference step S440 to step S460 in the foregoing description, in step S440, if the electronic device determines that the isolation between the first antenna and the second antenna is greater than the second isolation threshold, the electronic device continues to perform step S450, step S460, and step S471.

When the isolation between the first antenna and the second antenna is relatively small, a transmission process may be greatly interfered. Therefore, the operating bandwidth of the Wi-Fi communication is reduced to 20 MHz, so that a suitable bandwidth can still be provided for the Bluetooth communication with a relatively large isolation protection bandwidth. Therefore, when the Wi-Fi communication and the Bluetooth communication are performed in parallel, interference can be effectively reduced, transmission performance of the two types of communication is balanced to some extent, and stability of a transmission process can be maintained as much as possible.

In step S472, the electronic device performs the Bluetooth communication and the Wi-Fi communication in parallel by using different antennas, and the operating bandwidth of the Wi-Fi communication is 40 MHz.

In this step, the electronic device performs the Bluetooth communication by using the first antenna and performs the Wi-Fi communication by using the second antenna, and the operating bandwidth of the Wi-Fi communication is 40 MHz.

It should be understood that the operation mode of the Wi-Fi communication and the Bluetooth communication in this step is the second parallel mode in the foregoing description.

With reference to step S430 in the foregoing description, if the electronic device determines that the isolation between the first antenna and the second antenna is greater than the first isolation threshold, it means that the isolation between the first antenna and the second antenna is large enough. In this case, the electronic device performs step S472.

It should be understood that although the operating bandwidth of the Wi-Fi communication is 40 MHz, because the isolation between the first antenna and the second antenna is large enough, an isolation protection bandwidth within a bandwidth range of 2.4 GHz is small. Therefore, for the Bluetooth communication, the electronic device preferentially selects, based on a frequency modulation operating principle of the Bluetooth, a bandwidth other than the 40 MHz operating bandwidth of the Wi-Fi communication, and still has a bandwidth available for the Bluetooth communication, without affecting transmission performance of the Bluetooth communication. In this way, when the Wi-Fi communication and the Bluetooth communication are performed in parallel, the two types of communication can have better transmission performance, and the Wi-Fi communication can also benefit more from a large bandwidth. For example, a bandwidth range of 2.4 GHz is approximately 80 MHz. If isolation between antennas is large enough, the isolation protection bandwidth may be 5 MHz. In addition to the 40 MHz operating bandwidth of the Wi-Fi communication, the operating bandwidth provided for the Bluetooth communication may be (80 - 40 - 5 x 2 = 30 (MHz)), satisfying transmission of the Bluetooth communication.

In step S473, if determining that the isolation between the first antenna and the second antenna is less than or equal to the second isolation, the electronic device performs the Wi-Fi communication and the Bluetooth communication through time division.

It should be understood that the operation mode of the Wi-Fi communication and the Bluetooth communication in this step is the time division mode in the foregoing description.

In this step, because the isolation between the first antenna and the second antenna does not meet a requirement of performing the Wi-Fi communication and the Bluetooth communication in parallel by using different antennas, interference of transmission of the Wi-Fi communication and the Bluetooth communication is relatively large, and the Wi-Fi communication and the Bluetooth communication are greatly affected. Therefore, to minimize an interference impact on the two types of communication, the Wi-Fi communication and the Bluetooth communication are performed through time division. In this way, compared with an impact caused by performing the Wi-Fi communication and the Bluetooth communication in parallel, an impact caused by performing the Wi-Fi communication and the Bluetooth communication through time division is smaller.

In this step, the operating bandwidth of the Wi-Fi communication is not limited, and may be 40 MHz or 20 MHz. However, it can be understood that, by designing the operating bandwidth of the Wi-Fi communication to be 40 MHz, the Wi-Fi communication can benefit from a large bandwidth, improving a transmission rate.

In some embodiments, with reference to step S420 and step S440, in step S420, if the electronic device determines that the operating bandwidth of the Wi-Fi communication is not 40 MHz, the operating bandwidth of the Wi-Fi communication is 20 MHz. Therefore, the electronic device performs step S440. If determining that the isolation between the first antenna and the second antenna is less than or equal to the second isolation, the electronic device performs step S473. In this case, the operating bandwidth on which the electronic device currently performs the Wi-Fi communication is still 20 MHz. In this case, the electronic device may continue to maintain the 20 MHz operating bandwidth of the Wi-Fi communication. Alternatively, to improve a transmission rate, the electronic device sets the operating bandwidth of the Wi-Fi communication from 20 MHz to 40 MHz, so that the operating bandwidth of the Wi-Fi communication finally becomes 40 MHz.

In some other embodiments, with reference to step S420, step S430, and step S440, the current operating bandwidth of the Wi-Fi communication is 40 MHz. Therefore, in S473, the electronic device may continue to maintain the 40 MHz operating bandwidth of the Wi-Fi communication to benefit from a large bandwidth.

For a process in which the electronic device performs the Wi-Fi communication and the Bluetooth communication through time division, in an example, the electronic device performs the Wi-Fi communication and the Bluetooth communication through time division by using a same antenna (a Wi-Fi antenna). This manner is a common manner at present, and an antenna is shared in a time division multiplexing manner (as shown in FIG. 3 and FIG. 4).

In another example, the electronic device performs the Wi-Fi communication and the Bluetooth communication through time division by using different antennas. As shown in FIG. 5, the Wi-Fi module of the electronic device performs the Wi-Fi communication by using the antenna 1a, and the Bluetooth module performs the Bluetooth communication by using the antenna 1b. The Wi-Fi communication and the Bluetooth communication are performed through time division and alternately occupy a time-domain resource.

In this embodiment of this application, for example, configuration information is preconfigured in the electronic device, and the configuration information indicates isolation between antennas. Optionally, the configuration information further indicates the first isolation threshold and the second isolation threshold. For example, when the electronic device is delivered, the configuration information is preconfigured inside the electronic device. During implementation, the electronic device may obtain the isolation between the antennas based on the configuration information to determine the first antenna, and obtain the first isolation threshold and the second isolation threshold based on the configuration information, determining the operation mode of the Wi-Fi communication and the Bluetooth communication.

In some embodiments, if step S430 and step S440 in the method 400 are performed by a first processing module (for example, an AP) other than the Wi-Fi module in the electronic device, the first processing module (for example, the AP) may determine the isolation between the antennas based on the configuration information to determine the first antenna, and determine the first isolation threshold and the second isolation threshold based on the configuration information to determine the operation mode of the Wi-Fi communication and the Bluetooth communication. After determining the operation mode of the Wi-Fi communication and the Bluetooth communication, the first processing module (for example, the AP) sends bandwidth information to the Wi-Fi module. The bandwidth information indicates the operating bandwidth of the Wi-Fi communication in the finally determined operation mode, so that the Wi-Fi module sets the operating bandwidth of the Wi-Fi communication. In step S450, the Wi-Fi module sets the operating bandwidth of the Wi-Fi communication to 20 MHz based on the bandwidth information.

If the first processing module is the AP, in an example, if the configuration information is configured in the Wi-Fi module, the Wi-Fi module sends the configuration information to the AP, so that the AP obtains the configuration information. For example, if the Wi-Fi module and the Bluetooth module are integrated into one chip (briefly referred to as a Wi-Fi Bluetooth chip), the Wi-Fi Bluetooth chip sends the configuration information to the AP.

In another example, if the configuration information is configured in the AP, the AP may read the configuration information from the AP.

In another example, if one part of information (for example, the second isolation threshold) in the configuration information is configured in the Wi-Fi module, and another part of information (for example, the isolation between the antennas and the first isolation threshold) in the configuration information is configured in the AP, the Wi-Fi module sends the one part of information in the configuration information to the AP, and the AP reads the another part of information in the configuration information from the AP, to obtain the complete configuration information.

In some other embodiments, if step S430 and step S440 in the method 400 are performed by the Wi-Fi module in the electronic device, the Wi-Fi module may determine the isolation between the antennas based on the configuration information to determine the first antenna, and determine the first isolation threshold and the second isolation threshold based on the configuration information to determine the operation mode of the Wi-Fi communication and the Bluetooth communication. After the operation mode of the Wi-Fi communication and the Bluetooth communication is determined, the operating bandwidth of the Wi-Fi communication is determined, and the Wi-Fi module sets the operating bandwidth of the Wi-Fi communication. In step S450, after performing determining based on each step, the Wi-Fi module sets the operating bandwidth of the Wi-Fi communication to 20 MHz.

For example, if the Wi-Fi module and the Bluetooth module are integrated into one chip (briefly referred as a Wi-Fi Bluetooth chip), step S430 and step S440 in the method 400 are performed by the Wi-Fi Bluetooth chip.

In an example, if configuration information is configured in the first processing module (for example, the AP), the first processing module (for example, the AP) sends the configuration information to the Wi-Fi module, so that the Wi-Fi module obtains the configuration information.

In another example, if configuration information is configured in the Wi-Fi module, the Wi-Fi module may read the configuration information from the Wi-Fi module.

In another example, if one part of information (for example, the second isolation threshold) in the configuration information is configured in the Wi-Fi module, and another part of information (for example, the isolation between the antennas and the first isolation threshold) in the configuration information is configured in the AP, the AP sends the another part of information in the configuration information to the Wi-Fi module, and the Wi-Fi module reads the one part of information in the configuration information from the Wi-Fi module, to obtain the complete configuration information.

In other embodiments below, a process in which the modules in the electronic device determine the isolation between the antennas and the isolation threshold based on the configuration information to determine the operation mode of the Wi-Fi communication and the Bluetooth communication is similar to that described herein. For brevity, details are not described subsequently again.

It should be understood that sequence numbers of the foregoing steps do not indicate execution sequences of the steps. The execution sequences of the steps should be determined based on internal logic of the steps. For example, step S460 may be performed in any process after step S440.

According to the short-distance communication method provided in this embodiment of this application, when the operating frequency band of the Wi-Fi communication coincides with the operating frequency band of the Bluetooth communication (for example, the operating frequency band of both the Wi-Fi communication and the Bluetooth communication is 2.4 GHz), the operation mode of the Wi-Fi communication and the Bluetooth communication is flexibly adjusted based on the isolation between the antennas, to be specific, the Wi-Fi communication and the Bluetooth communication are performed through time division, or the Wi-Fi communication and the Bluetooth communication are performed in parallel by using different antennas and the operating bandwidth of the Wi-Fi communication is 40 MHz, or the Wi-Fi communication and the Bluetooth communication are performed in parallel by using different antennas and the operating bandwidth of the Wi-Fi communication is 20 MHz. In this way, in different scenarios, the operation mode of the Wi-Fi communication and the Bluetooth communication is flexibly adjusted, so that interference between the Wi-Fi communication and the Bluetooth communication can be reduced as much as possible to maintain a relatively good transmission speed rate and relatively good transmission performance, not only improving system flexibility, but also improving system stability.

When the electronic device performs the Wi-Fi communication and the Bluetooth communication through time division, for a small-volume electronic device (for example, a mobile phone or a watch), when the isolation between the antennas is not large enough, to reduce the interference, it is considered to perform the Wi-Fi communication and the Bluetooth communication through time division. In addition, a small-volume electronic device cannot be provided with more antennas. In most cases, performing the Wi-Fi communication and the antenna communication through time division by multiplexing an antenna is very suitable for the small-volume electronic device.

When the electronic device performs the Wi-Fi communication and the Bluetooth communication in parallel by using different antennas and the operating bandwidth of the Wi-Fi communication is 40 MHz, because the isolation between the first antenna used for the Bluetooth communication and the second antenna used for the Wi-Fi communication is large enough, the protection and isolation bandwidth is relatively small. In this way, even if the operating bandwidth of the Wi-Fi communication is 40 MHz, a suitable bandwidth can be provided for the Bluetooth communication. Therefore, transmission requirements of the Wi-Fi communication and the Bluetooth communication can be met while the interference can be effectively reduced. In addition, the Wi-Fi communication can benefit from a large bandwidth.

When the electronic device performs the Wi-Fi communication and the Bluetooth communication through time division by using different antennas and the operating bandwidth of the Wi-Fi communication is 20 MHz, the isolation between the first antenna used for the Bluetooth communication and the second antenna used for the Wi-Fi communication is not large enough but still feasible. To reduce interference, the protection and isolation bandwidth is relatively large. In this way, a larger bandwidth can be provided for Bluetooth by reducing an operating bandwidth of Wi-Fi. Therefore, transmission requirements of the Wi-Fi communication and the Bluetooth communication can be met while the interference can be effectively reduced.

FIG. 10 is a schematic flowchart of a short-distance communication method 500 according to an embodiment of this application. The method 500 describes a process in which an electronic device exits a Bluetooth independent transmission state. The main idea is that when the electronic device performs Wi-Fi communication and Bluetooth communication in parallel and an operating bandwidth of the Wi-Fi communication is 20 MHz, the electronic device exits the Bluetooth independent transmission state, and recovers a 40 MHz operating bandwidth of the Wi-Fi communication, so that the Wi-Fi communication benefits from a large bandwidth.

In step S510, the electronic device determines to exit the Bluetooth independent transmission state.

In this step, the electronic device may determine, based on different scenarios, to exit the Bluetooth independent transmission state.

In some embodiments, the electronic device currently no longer performs the Bluetooth communication or stops the Bluetooth communication.

In some other embodiments, the electronic device is currently performing a Bluetooth service C and a Wi-Fi service in parallel, and when needing to perform a Bluetooth service D, determines that the electronic device needs to exit the Bluetooth independent transmission state. A priority of the Bluetooth service C is higher than a priority of the Bluetooth service D. For detailed descriptions of a Bluetooth service, refer to the foregoing related descriptions. Details are not described again.

It can be understood that in this embodiment, when the priority of the Bluetooth service is high, requirements of the Bluetooth communication on a speed rate and real-time performance are also high. Therefore, if allowed, the electronic device performs the Bluetooth communication and the Wi-Fi communication in parallel, and requirements of both the Wi-Fi communication and the Bluetooth communication can be met When the priority of the Bluetooth service becomes lower, requirements of the Bluetooth communication on the speed rate and the real-time performance also become lower, and the Bluetooth communication does not have a large impact on the Wi-Fi communication. Therefore, to avoid occupying unnecessary resources, the electronic device may exit the Bluetooth independent transmission state, and may perform the Bluetooth communication and the Wi-Fi communication through time division.

In an example, the Bluetooth service C may be a service in which the electronic device transmits Bluetooth data with a Bluetooth device. A Bluetooth service D may be a service in which the electronic device maintains a communication connection with the Bluetooth device but does not transmit the Bluetooth data. The Bluetooth data may be data in various formats. For formats of the Bluetooth data, refer to the foregoing related descriptions.

In another example, a Bluetooth service C is Bluetooth data in a transmission format C, and a Bluetooth service D is Bluetooth data in a transmission format D. For example, the Bluetooth data in the format C may be Bluetooth data in an LDAC, AAC, or APTX format, and the Bluetooth data in the format D may be Bluetooth data in an SBC format.

It should be understood that the foregoing examples are merely exemplary descriptions. The Bluetooth service C and the Bluetooth service D may be services in any form, provided that a priority of the Bluetooth service C is higher than a priority of the Bluetooth service D.

In step S520, the electronic device determines whether the operating bandwidth of the Wi-Fi communication is 20 MHz.

If the electronic device determines that the operating bandwidth of the Wi-Fi communication is 20 MHz, the electronic device performs step S530.

If the electronic device determines that the operating bandwidth of the Wi-Fi communication is not 20 MHz, it means that the operating bandwidth of the Wi-Fi communication is 40 MHz, and the electronic device performs step S540.

It should be understood that the operating bandwidth of the Wi-Fi communication described herein represents a bandwidth actually used by the electronic device to perform the Wi-Fi communication.

In step S530, the electronic device sets the operating bandwidth of the Wi-Fi communication to 40 MHz.

Because the current operating bandwidth of the Wi-Fi communication is 20 MHz, after the electronic device exits the Bluetooth independent transmission state, it means that the Bluetooth does not need to preempt resources with the Wi-Fi or preempts only few resources. This does not affect Wi-Fi transmission. Therefore, to enable the Wi-Fi communication to benefit from a large bandwidth as much as possible, the operating bandwidth of the Wi-Fi communication is changed from 20 MHz to 40 MHz.

For detailed descriptions of how the processor and the Wi-Fi module in the electronic device interact to set the operating bandwidth of the Wi-Fi communication, refer to the related descriptions of step S450 above. For brevity, details are not described herein again. The only difference lies in that in step S450, the operating bandwidth of the Wi-Fi communication is set to 20 MHz; and herein, the operating bandwidth of the Wi-Fi communication is set to 40 MHz.

It should be understood that the operating bandwidth of the Wi-Fi communication set in this step is the maximum bandwidth that can be used by the Wi-Fi communication.

In step S540, the electronic device disconnects a Bluetooth module from a first antenna.

In a process in which the electronic device performs the Wi-Fi communication and the Bluetooth communication in parallel, the first antenna is used to perform the Bluetooth communication and a second antenna is used to perform the Wi-Fi communication. Therefore, when the Bluetooth independent transmission state is exited, the connection between the Bluetooth module and the first antenna needs to be disconnected.

When the connection between the Bluetooth module and the first antenna is disconnected, if Bluetooth communication is no longer performed subsequently, the electronic device may not connect the Bluetooth module to any antenna.

When the connection between the Bluetooth module and the first antenna is disconnected, if the Bluetooth communication continues to be performed subsequently, or if the electronic device not in the Bluetooth independent transmission state considers by default that the Bluetooth module needs to connect to another antenna, the Bluetooth module further needs to be connected to the another antenna.

In an example, the electronic device disconnects the Bluetooth module from the first antenna, and connects the Bluetooth module and the second antenna. That is, the electronic device switches the Bluetooth module from the first antenna to the second antenna.

In this way, if the Bluetooth communication continues subsequently, the electronic device performs the Wi-Fi communication and the Bluetooth communication through time division by using the second antenna. Alternatively, even if the Bluetooth communication is not performed subsequently, the electronic device considers by default that the Bluetooth module needs to maintain the connection to the second antenna.

If the first antenna is a cellular antenna, for detailed descriptions of a process in which the electronic device needs to switch the Bluetooth module from the first antenna to the second antenna, refer to the descriptions about FIG. 8 and FIG. 9 above. FIG. 9 shows a state in which the Bluetooth module is connected to the first antenna (for example, the antenna 22). FIG. 8 shows a state in which the Bluetooth module is switched to the second antenna (for example, the antenna 23).

According to the short-distance communication method provided in this embodiment of this application, when the electronic device is in the Bluetooth independent transmission state, to be specific, performs the Wi-Fi communication, and the Bluetooth communication in parallel and the operating bandwidth of the Wi-Fi communication is 20 MHz, after determining to exit the Bluetooth independent transmission state, the electronic device restores the 40 MHz operating bandwidth of the Wi-Fi communication to increase a transmission speed rate of the Wi-Fi communication, so that the Wi-Fi communication benefits from a large bandwidth.

It should be understood that sequence numbers of the foregoing steps do not indicate execution sequences of the steps. The execution sequences of the steps should be determined based on internal logic of the steps. For example, step S530 may be performed after step S540.

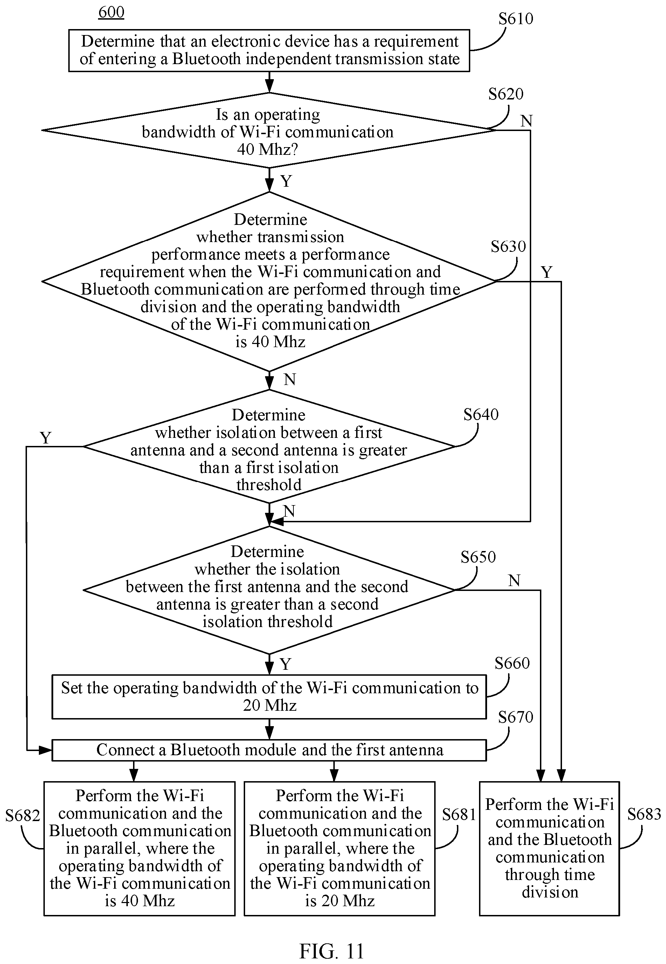

FIG. 11 is an example flowchart of a short-distance communication method 600 according to an embodiment of this application. Different from the method 400, in the method 600, whether transmission performance meets a requirement when Wi-Fi communication and Bluetooth communication are performed through time division is preferentially considered. If the transmission performance does not meet the requirement, whether the transmission performance meets the requirement when the Wi-Fi communication and the Bluetooth communication are performed in parallel is further considered with reference to an operating bandwidth and isolation, to determine an operation mode most suitable for the Wi-Fi communication and the Bluetooth communication.

In step S610, an electronic device determines that the electronic device has a requirement of entering a Bluetooth independent transmission state.

For detailed descriptions of step S610, refer to the related descriptions of step S410 above. For brevity, details are not described again.

In step S620, the electronic device determines whether an operating bandwidth of the Wi-Fi communication is 40 MHz.

If the electronic device determines that the operating bandwidth of the Wi-Fi communication is 40 MHz, the electronic device performs step S630.

If the electronic device determines that the operating bandwidth of the Wi-Fi communication is not 40 Mhz, it indicates that the operating bandwidth of the Wi-Fi communication is 20 Mhz. Therefore, the electronic device performs step S540.

In step S630, the electronic device determines whether the transmission performance meets the performance requirement when the Wi-Fi communication and the Bluetooth communication are performed through time division and the operating bandwidth of the Wi-Fi communication is 40 MHz.

For example, the transmission performance may be represented by using a parameter such as a transmission rate and a transmission delay of the device.

As described above, in the current state, the electronic device may perform the Wi-Fi communication but does not perform the Bluetooth communication, or may perform the Bluetooth communication and the Wi-Fi communication through time division. It is considered that in most scenarios, the electronic device may perform the Bluetooth communication and the Wi-Fi communication through time division and the operating bandwidth of the Wi-Fi communication is 40 MHz. Therefore, the transmission performance is determined when the electronic device preferentially performs the two types of communication through time division and the operating bandwidth of the Wi-Fi communication is 40 MHz.

If determining that the transmission performance meets the performance requirement when the two types of communication are performed through time division and the operating bandwidth of the Wi-Fi communication is 40 MHz, the electronic device performs step S683. If determining that the transmission performance does not meet the performance requirement when the two types of communication are performed through time division and the operating bandwidth of the Wi-Fi communication is 40 MHz, the electronic device performs step S640.

In an example, the transmission performance is represented by a transmission speed rate. Correspondingly, the performance requirement may be: A transmission speed rate is greater than a speed rate threshold when the Wi-Fi communication and the Bluetooth communication are performed through time division and an operating bandwidth of a Wi-Fi service is 40 MHz.

In another example, the transmission performance is represented by a transmission delay. Correspondingly, the performance requirement may be: A transmission delay is greater than a delay threshold when the Wi-Fi communication and the Bluetooth communication are performed through time division and the operating bandwidth of the Wi-Fi communication is 40 MHz.

In this embodiment of this application, it is considered that in most scenarios, the electronic device may perform the Bluetooth communication and the Wi-Fi communication through time division and the operating bandwidth of the Wi-Fi communication is 40 MHz. Therefore, the transmission performance is preferentially compared with the performance requirement when the electronic device performs the two types of communication through time division and the operating bandwidth of the Wi-Fi communication is 40 MHz. In this way, when the performance requirement is met, the electronic device may continue to perform the two types of communication based on the current state. Because no other determining processing is additionally required, a processing time and a computing resource are effectively saved. In addition, a problem of short-time communication unsmoothness caused by switching of an operation mode of the two types of communication is avoided.

In step S640, the electronic device determines whether isolation between a first antenna and a second antenna is greater than a first isolation threshold.

If the electronic device determines that the isolation between the first antenna and the second antenna is greater than the first isolation threshold, the electronic device performs step S670 and step S682.

If the electronic device determines that the isolation between the first antenna and the second antenna is less than or equal to the first isolation threshold, the electronic device performs step S650.

For detailed descriptions of step S640, refer to the related descriptions of step S430 above. Details are not described again.

In step S650, when determining that the isolation between the first antenna and the second antenna is less than or equal to the first isolation threshold, the electronic device determines whether the isolation between the first antenna and the second antenna is greater than a second isolation threshold.

If the electronic device determines that the isolation between the first antenna and the second antenna is greater than the second isolation threshold, the electronic device performs step S660, step S670, and step S681.

If the electronic device determines that the isolation between the first antenna and the second antenna is less than or equal to the second isolation threshold, the electronic device performs step S683, to be specific, performs the Wi-Fi communication and the Bluetooth communication through time division.

For detailed descriptions of step S650, refer to the related descriptions of step S440 above. Details are not described again.

In step S660, when determining that the isolation between the first antenna and the second antenna is greater than the second isolation, the electronic device sets the operating bandwidth of the Wi-Fi communication to 20 MHz.

For other detailed descriptions of step S660, refer to the related descriptions of step S450 above. Details are not described again.

In step S670, the electronic device connects a Bluetooth module and the first antenna.

For detailed descriptions of step S670, refer to the related descriptions of step S460 above. Details are not described again.

Similar to the method 400, for ease of description, it is assumed that the router supports bandwidths of 20 MHz and 40 MHz. After the electronic device finally determines the operation mode, an operating bandwidth actually used to perform the Wi-Fi communication is the same as an operating bandwidth in the determined operation mode. In this case, the electronic device may perform step S681, step S682, or step S683.

In step S681, the electronic device performs the Bluetooth communication and the Wi-Fi communication in parallel by using different antennas, and the operating bandwidth of the Wi-Fi communication is 20 MHz.

In step S682, the electronic device performs the Bluetooth communication and the Wi-Fi communication in parallel by using different antennas, and the operating bandwidth of the Wi-Fi communication is 40 MHz.

For detailed descriptions of step S681 and step S682, respectively refer to the related descriptions of step S471 and step S472 above. Details are not described again.

In step S683, if determining that the isolation between the first antenna and the second antenna is less than or equal to the second isolation, the electronic device performs the Wi-Fi communication and the Bluetooth communication through time division.

It should be noted that with reference to step S630, if it is determined in S630 to perform step S683, the operating bandwidth of the Wi-Fi communication is 40 MHz when the Wi-Fi communication and the Bluetooth communication are performed through time division.

For other detailed descriptions of step S683, refer to the related descriptions of step S473 above. Details are not described again.

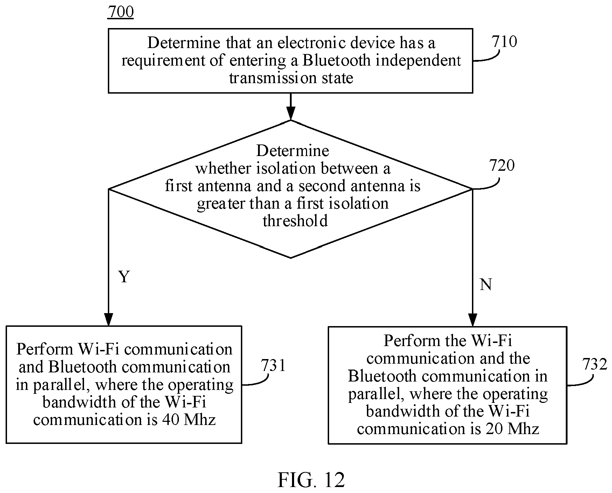

FIG. 12 is an example flowchart of a short-distance communication method 700 according to an embodiment of this application. Different from the method 400, in the method 700, an electronic device determines any parallel mode based on isolation when determining that the electronic device has a requirement of entering a Bluetooth independent transmission state.

In step S710, the electronic device determines that the electronic device has the requirement of entering the Bluetooth independent transmission state.

For detailed descriptions of this step, refer to the related descriptions of step S410. Details are not described again.

In step S720, the electronic device determines whether isolation between a first antenna and a second antenna is greater than a first isolation threshold.

It should be understood that step S720 and step S710 may be performed in an reversed order. This is not limited in this embodiment of this application.

As described above, the first isolation threshold is related to a 40 MHz operating bandwidth of Wi-Fi communication.

If the electronic device determines that the isolation between the first antenna and the second antenna is greater than the first isolation threshold, it means that in the first isolation threshold, the isolation between the first antenna and the second antenna is large enough, and a requirement of a second parallel mode can be met, to be specific, a requirement that the electronic device performs the Wi-Fi communication and the Bluetooth communication in parallel by using different antennas and the operating bandwidth of the Wi-Fi communication is 40 MHz is met. Therefore, when the electronic device determines that the operation mode is the second parallel mode, the electronic device may perform step S731.

If the electronic device determines that the isolation between the first antenna and the second antenna is less than the first isolation threshold, it indicates that in the first isolation threshold, the isolation between the first antenna and the second antenna is not large enough, and a requirement of the second parallel mode cannot be met. Therefore, when the isolation between the first antenna and the second antenna is limited, by reducing the operating bandwidth of the Wi-Fi communication, a suitable bandwidth can be provided for the Bluetooth communication as much as possible with a relatively large isolation protection bandwidth, effectively reducing interference. Therefore, if the electronic device determines that the isolation between the first antenna and the second antenna is less than the first isolation threshold, the electronic device determines that the operation mode of the electronic device is a first parallel mode, to be specific, the electronic device performs the Wi-Fi communication and the Bluetooth communication in parallel by using different antennas and the operating bandwidth of the Wi-Fi communication is 20 MHz. In this case, the electronic device may perform step S732.

If the isolation between the first antenna and the second antenna is equal to the first isolation threshold, the determined operation mode of the Wi-Fi communication and the Bluetooth communication may be the first parallel mode or a second parallel mode. This is not limited herein. The operation mode may be flexibly adjusted based on an actual situation.

In some embodiments, before step S720, the method 700 may further include: The electronic device determines whether the current operating bandwidth of the Wi-Fi communication is 40 MHz.

If the electronic device determines that the current operating bandwidth of the Wi-Fi communication is 40 MHz, the electronic device performs step S720.

If the electronic device determines that the current operating bandwidth of the Wi-Fi communication is not 40 MHz, it means that the current operating bandwidth of the Wi-Fi communication is 20 MHz. In this case, the electronic device may skip step S720, and performs step 732.

In another embodiment, the electronic device may not need to determine the current operating bandwidth of the Wi-Fi communication, performs step S720 after step S710, and determines a suitable operation mode based on a determining result of step S720.

In some embodiments, the method 700 may further include: The electronic device connects a Bluetooth module and the first antenna.

It should be understood that the step only needs to be performed after step S710 and before step S731 or step S732. This is not limited herein. For example, this step may be performed before or after step S720.

For detailed descriptions of this step, refer to the related descriptions of step S460 above. Details are not described again.

It should be noted that in some embodiments, if the electronic device is currently performing the Wi-Fi communication but is not performing the Bluetooth communication, and the Bluetooth module is connected to the first antenna by default, the electronic device does not need to connect the Bluetooth module and the first antenna, and may directly perform step S731 or step S732.

For ease of description, it is assumed that the router supports bandwidths of 20 MHz and 40 MHz. After the electronic device finally determines the operation mode, an operating bandwidth actually used to perform the Wi-Fi communication is the same as an operating bandwidth in the determined operation mode. In this case, the electronic device may perform step S731 or step S732.

In step S731, the electronic device performs the Bluetooth communication and the Wi-Fi communication in parallel by using different antennas, and the operating bandwidth of the Wi-Fi communication is 40 MHz.

In this step, if the electronic device determines that the isolation between the first antenna and the second antenna is greater than the first isolation threshold, the electronic device performs the Bluetooth communication by using the first antenna and performs the Wi-Fi communication by using the second antenna, and the operating bandwidth of the Wi-Fi communication is 40 MHz.

For detailed descriptions of this step, refer to the related descriptions of step S472 above. Details are not described again.

In step S732, the electronic device performs the Wi-Fi communication and the Bluetooth communication in parallel by using different antennas, and the operating bandwidth of the Wi-Fi communication is 20 MHz.

In this step, if the electronic device determines that the isolation between the first antenna and the second antenna less than or equal to the first isolation threshold, the electronic device performs the Bluetooth communication by using the first antenna and performs the Wi-Fi communication by using the second antenna, and the operating bandwidth of the Wi-Fi communication is 20 MHz.

For detailed descriptions of this step, refer to the related descriptions of step S471 above. Details are not described again.

It can be understood that before step S731 and step S732 are performed, the operating bandwidth of the Wi-Fi communication has been set to 40 MHz corresponding to step S731 or 20 MHz corresponding to step S732.

Because the current operating bandwidth of the Wi-Fi communication may be consistent or inconsistent with the operating bandwidth of the Wi-Fi communication in the operation mode finally determined based on the isolation, in fact, when the current operating bandwidth of the Wi-Fi communication is consistent with the operating bandwidth of the Wi-Fi communication in the operation mode finally determined based on the isolation, the electronic device may not need to reset the operating bandwidth of the Wi-Fi communication, and continues to use the previous operating bandwidth, reducing a processing process.

Based on this, with reference to that the method 700 includes the foregoing step in which the electronic device determines whether the current operating bandwidth of the Wi-Fi communication is 40 MHz, if the electronic device determines that the current operating bandwidth of the Wi-Fi communication is 40 MHz, and the finally determined operation mode is the second parallel mode (where the operating bandwidth of the Wi-Fi communication is 40 MHz) in step S731, the electronic device does not need to reset the operating bandwidth of the Wi-Fi communication. If the electronic device determines that the current operating bandwidth of the Wi-Fi communication is 40 MHz, and the determined operation mode is the first parallel mode (where the operating bandwidth of the Wi-Fi communication is 20 MHz) in step S732, the electronic device needs to change the operating bandwidth of the Wi-Fi communication to 20 MHz.

In the method 700, for example, configuration information is preconfigured in the electronic device, and the configuration information indicates isolation between antennas. Optionally, the configuration information further indicates the first isolation threshold. For example, when the electronic device is delivered, the configuration information is preconfigured inside the electronic device. During implementation, the electronic device may determine the first antenna based on the isolation indicated by the configuration information, and obtain the first isolation threshold based on the configuration information, determining the operation mode of the Wi-Fi communication and the Bluetooth communication.

In some embodiments, if step S720 in the method 700 is performed by a first processing module (for example, an AP) other than the Wi-Fi module in the electronic device, the first processing module (for example, the AP) may determine the isolation between the antennas based on the configuration information to determine the first antenna, and determine the first isolation threshold and the second isolation threshold based on the configuration information to determine the operation mode of the Wi-Fi communication and the Bluetooth communication. After determining the operation mode of the Wi-Fi communication and the Bluetooth communication, the first processing module (for example, the AP) sends bandwidth information to the Wi-Fi module. The bandwidth information indicates the operating bandwidth of the Wi-Fi communication in the finally determined operation mode, so that the Wi-Fi module sets the operating bandwidth of the Wi-Fi communication.

In some other embodiments, if step S720 in the method 700 is performed by the Wi-Fi module in the electronic device, the Wi-Fi module may determine the isolation between the antennas based on the configuration information to determine the first antenna, and determine the first isolation threshold and the second isolation threshold based on the configuration information to determine the operation mode of the Wi-Fi communication and the Bluetooth communication. After the operation mode of the Wi-Fi communication and the Bluetooth communication is determined, the operating bandwidth of the Wi-Fi communication is determined, and the Wi-Fi module sets the operating bandwidth of the Wi-Fi communication.

For detailed descriptions of a process in which the modules in the electronic device determine the isolation between the antennas and the first isolation threshold based on the configuration information to determine the operation mode of the Wi-Fi communication and the Bluetooth communication, refer to the related descriptions in the method 400. Details are not described herein again.

The electronic device may be connected to different models of routers to perform the Wi-Fi communication. Different types of routers have different performance, and can directly affect the operation mode of the Wi-Fi and the Bluetooth.

Table 1 shows speed rates of an electronic device when Wi-Fi communication and Bluetooth communication are performed under different routers and different Bluetooth services according to an embodiment of this application. In a first scenario (the Bluetooth is enabled but is not scanned (the Wi-Fi exclusively occupies an antenna)), the electronic device performs the Wi-Fi communication but does not perform the Bluetooth communication, and the Wi-Fi communication exclusively occupies the antenna. This scenario may be similar to a scenario in which the Wi-Fi communication and the Bluetooth communication are performed in parallel by using different antennas. Therefore, transmission performance in this scenario may also be similar to transmission performance when the electronic device performs the Wi-Fi communication and the Bluetooth communication in parallel by using different antennas. In another scenario, the table shows speed rates of the electronic device when the electronic device performs the Wi-Fi communication and the Bluetooth communication through time division by multiplexing the antenna.

**Table 1**

| Frequency band | Scenario | Transmission direction | Router A | | Router B | | Router C | |
|---|---|---|---|---|---|---|---|---|
| | | | 20 MHz bandwidth | 40 MHz bandwidth | 20 MHz bandwidth | 40 MHz bandwidth | 20 MHz bandwidth | 40 MHz bandwidth |
| 2.4 GHz | Bluetooth is enabled but is not scanned (Wi-Fi exclusively occupies an antenna) | DL | **138** | 362 | 207 | 409 | 79 | 88 |
| | | UL | **148** | 398 | 195 | 363 | 90 | 91.1 |
| | Only BLE of the Bluetooth is enabled | DL | 163 | 348 | 189 | 422 | 60 | 86.9 |
| | | UL | 170 | 395 | 181 | 364 | 90.1 | 90.9 |
| | Bluetooth long-scan | DL | 108 | 206 | 118 | 245 | 34.9 | 40.2 |
| | | UL | 102 | 261 | 109 | 248 | Flow interruption Disconnection | 64.7 |
| | SBC | DL | 116 | 226 | 125 | 227 | 28.4 | 31.7 |
| | | UL | 120 | 277 | 117 | 246 | Flow interruption Disconnection | 59.7 |
| | AAC | DL | 130 | **248** | 139 | 268 | 28.2 | 30.6 |
| | | UL | 134 | **283** | 136 | 280 | Flow interruption Disconnection | 58.6 |
| | LDAC | DL | 6.53 | 22.7 | 30.2 | 63.3 | 5.97 | 6.27 |
| | | UL | 11 | 50.9 | 23.8 | 68.8 | 9.58 | 16.9 |

As shown in Table 1, in the router A, when data of the Bluetooth service is in an AAC format, two pieces of bold data in Table 1 are compared. It can be obtained through analysis that speed rates (the bold data in the second column: 248 and 283) of the electronic device when the Wi-Fi communication and the Bluetooth communication are performed through time division and an operating bandwidth of the Wi-Fi communication is 40 MHz are higher than speed rates (the bold data in the first column: 138 and 148) of the electronic device when the two types of communication are performed in parallel and the operating bandwidth of the Wi-Fi communication is 20 MHz. It means that in this scenario, the operation mode is optimal when the Wi-Fi communication and the Bluetooth communication are performed through time division and the operating bandwidth of the Wi-Fi communication is 40 MHz.

For another example, in the router A, when data of the Bluetooth service is in an LDAC format, a speed rate is very low when the Wi-Fi communication and the Bluetooth communication are performed through time division. Therefore, by way of backward speculation, a speed rate is high when the Wi-Fi communication and the Bluetooth communication are performed in parallel.

For another example, in the router C, regardless of a form of the Bluetooth service, a speed rate is always relatively low when the Wi-Fi communication and the Bluetooth communication are performed through time division. Therefore, by way of backward speculation, a speed rate is high when the Wi-Fi communication and the Bluetooth communication are performed in parallel.

Therefore, to sum up the foregoing analysis, different models of routers affect the operation modes of the Wi-Fi and the Bluetooth. In some scenarios, when services are the same, operation modes of good transmission performance embodied by the electronic device in different routers are different. For example, for a same service, in the router A, transmission performance of the electronic device is good when the Wi-Fi communication and the Bluetooth communication (the time division mode) are performed through time division, but in the router B, transmission performance is good when the Wi-Fi communication and the Bluetooth communication are performed in parallel (a first parallel mode or a second parallel mode). In some other scenarios, when routers are the same, operation modes of good transmission performance embodied by the electronic device in different Bluetooth services are also different. For example, for a same router, the transmission performance of the electronic device is good when the Wi-Fi communication and the Bluetooth communication are performed through time division (a time division mode) and the Bluetooth service is a Bluetooth service A, but the transmission performance is good when the Wi-Fi communication and the Bluetooth communication are performed in parallel (a first parallel mode or a second parallel mode) and the Bluetooth service is a Bluetooth service B.

Therefore, because the transmission performance of the electronic device is different in different types of routers and Bluetooth services, an embodiment of this application proses that a whitelist may be provided. For example, the whitelist may include four types of content: a plurality of Bluetooth services, a plurality of routers, a plurality of isolation ranges, and three operation modes. In addition, the four types of content form M combinations, and each combination includes one Bluetooth service, one router, one isolation range, and a corresponding operation mode. During implementation, when it is determined that the electronic device has a requirement of entering a Bluetooth independent transmission state, whether a type of a Bluetooth service and a router are content in the whitelist is preferentially considered. If the type of the Bluetooth service and the router are content in the whitelist, the operation mode of the Wi-Fi communication and the Bluetooth communication is directly determined based on the content in the whitelist. If the type of the Bluetooth service and the router are not content in the whitelist, the operation mode of the Wi-Fi communication and the Bluetooth communication may be determined according to the method 600 or in another manner.

Table 2 shows content of a whitelist provided in an embodiment of this application. In Table 2, "time division" indicates that the Wi-Fi communication and the Bluetooth communication are performed through time division. Similarly, "in parallel" indicates that the Wi-Fi communication and the Bluetooth communication are performed in parallel. "40 MHz" indicates that the operating bandwidth of the Wi-Fi communication is 40 MHz. "20 MHz" indicates that the operating bandwidth of the Wi-Fi communication is 20 MHz. a indicates isolation between antennas, a1 is a first isolation threshold, and a2 is a second isolation threshold. Each row forms one combination. Each combination includes one Bluetooth service, one router, one isolation range, and a corresponding operation mode. When a Bluetooth service, a router, and isolation are determined, a corresponding operation mode may be directly determined based on each combination. The combination in the first row is used as an example. When the Bluetooth service is Bluetooth data in the AAC format, the model is the router A, and the isolation a is less than a2, the operation mode is: The Wi-Fi communication and the Bluetooth communication are performed through time division and the operating bandwidth of the Wi-Fi communication is 40 MHz.

**Table 2**

| Sequence number | Bluetooth service | Router | Isolation | Operation mode |
|---|---|---|---|---|
| 1 | AAC | A | a2 < a < a1 | Time division + 40 MHz |
| 2 | SBC | A | a2 < a < a1 | Time division + 40 MHz |
| 2 | LDAC | A | a2 < a < a1 | In parallel + 20 MHz |
| 3 | LDAC | C | a2 < a < a1 | In parallel + 20 MHz |
| 4 | SBC | C | a2 < a < a1 | In parallel + 20 MHz |
| 5 | AAC | C | a2 < a < a1 | In parallel + 20 MHz |
| 6 | LDAC | A | a > a1 | In parallel + 40 MHz |
| ... | ... | ... | ... | ... |

In an example, the whitelist may be preconfigured in the electronic device. For example, when an electronic device is delivered, the whitelist is preconfigured in the device.

In another example, the whitelist may alternatively be obtained by the electronic device from a server. For example, the electronic device may periodically send a request to the server to obtain the whitelist. For another example, the server may alternatively periodically and actively send the whitelist to the electronic device.

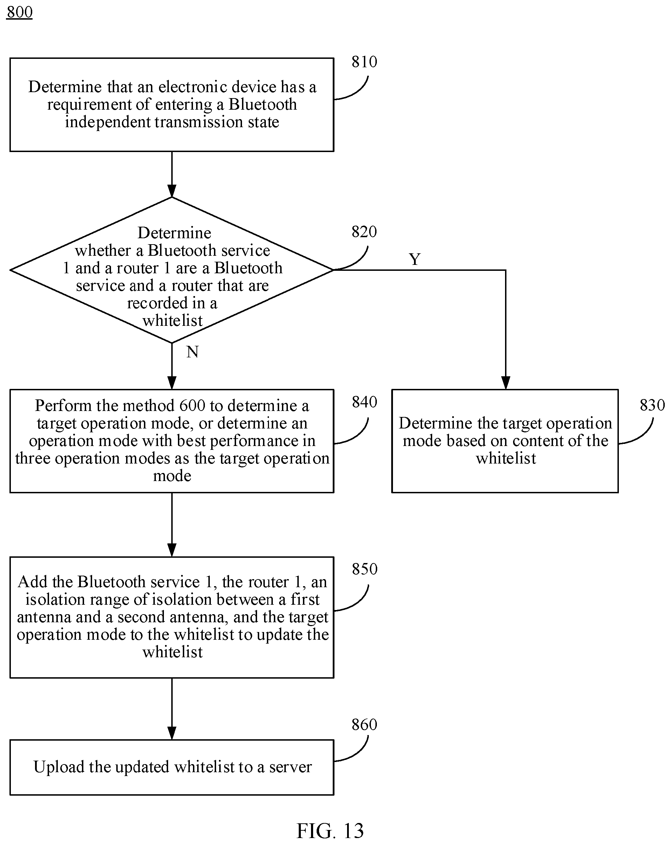

The following describes the foregoing embodiment in detail with reference to the schematic flowchart, shown in FIG. 13, of a short-distance communication method 800 according to an embodiment of this application.

In step S810, an electronic device determines that the electronic device has a requirement of entering a Bluetooth independent transmission state.

For detailed descriptions of this step, refer to the related descriptions of step S410 above. Details are not described again.

In step S820, the electronic device determines whether a Bluetooth service 1 and a router 1 are a Bluetooth service and a router that are recorded in a whitelist.

The Bluetooth service 1 is a service that the electronic device prepares to perform or continues to perform. For example, if the electronic device is currently not performing the Bluetooth service 1 or a priority of a currently performed Bluetooth service 2 is lower than a priority of the to-be-performed Bluetooth service 1, the Bluetooth service 1 is the service that the electronic device prepares to perform. For another example, if the electronic device is currently performing the Bluetooth service 1, and subsequently continues to perform the Bluetooth service 1, the Bluetooth service 1 is the service that the electronic device continues to perform.

The router 1 is a router to which the electronic device is currently connected, and is configured to provide a Wi-Fi network.

For detailed descriptions of the whitelist, refer to the related descriptions above. Details are not described again.

If the electronic device determines that the Bluetooth service 1 and the router 1 are the Bluetooth service and the router that are recorded in the whitelist, the electronic device performs step S830.

If the electronic device determines that the Bluetooth service 1 and the router 1 are not the Bluetooth service and the router that are recorded in the whitelist, the electronic device performs step S840.

In step S830, the electronic device determines a target operation mode based on content of the whitelist.

In this step, specifically, the electronic device determines, in the content of the whitelist based on the Bluetooth service 1, the router 1, and isolation between a first antenna and a second antenna, an operation mode corresponding to the Bluetooth service 1, the router 1, and the isolation between the first antenna and the second antenna, that is, the target operation mode.

Table 2 is used as an example. It is assumed that the Bluetooth service 1 is Bluetooth data in an LDAC format, the router 1 is a router A, and the isolation a between the first antenna and the second antenna is greater than a second isolation threshold a21 and is less than a first isolation threshold a1. In this case, a finally determined target operation mode is: Wi-Fi communication and Bluetooth communication are performed in parallel and an operating bandwidth of the Wi-Fi communication is 40 MHz.

In step S840, the electronic device performs the method 600 to determine the target operation mode, or determines an operation mode with best performance in the three operation modes as the target operation mode.

In the embodiment in which the electronic device performs the method 600 to determine the target operation mode, because step S610 is the same as step S710, step S620 may starts to be performed until the final target operation mode is determined.

It can be understood that the router and the Bluetooth service affect a time division mode and a parallel mode. When it is determined that transmission performance of the time division mode does not meet a requirement, the time division mode is temporarily not selected, and the parallel mode is considered. When the parallel mode is considered, whether the operation mode of the Bluetooth communication and the Wi-Fi communication is a first parallel mode or a second parallel mode is further determined based on the isolation between the first antenna and the second antenna. If the isolation does not meet a lowest threshold (the second isolation threshold), the time division mode is finally determined.

In an embodiment in which an operation mode with the best transmission performance in the three operation modes is determined as the target operation mode, in the router 1 and the Bluetooth service 1, the electronic device separately performs the three operation modes, and determines the operation mode with the best transmission performance as the target operation mode.

Specifically, in the router 1 and the Bluetooth service 1, the electronic device performs the Bluetooth communication and the Wi-Fi communication through time division by multiplexing the second antenna, that is, enters the time division mode, to obtain the transmission performance in the time division mode. The electronic device performs the Bluetooth communication by using the first antenna and performs the Wi-Fi communication by using the second antenna and the operating bandwidth of the Wi-Fi communication is 20 MHz, that is, enters the first parallel mode, to obtain the transmission performance in the first parallel mode. The electronic device performs the Bluetooth communication by using the first antenna and performs the Wi-Fi communication by using the second antenna and the operating bandwidth of the Wi-Fi communication is 40 MHz, that is, enters the second parallel mode, to obtain the transmission performance in the second parallel mode. The transmission performance in the three operation modes is compared, and the operation mode with the best transmission performance is determined as the target operation mode.

In an example, the transmission performance is represented by a transmission speed rate. Correspondingly, an operation mode in which the electronic device has the best transmission speed rate in the three operation modes may be determined as the target operation mode.

In another example, the transmission performance is represented by a transmission delay. Correspondingly, an operation mode in which the electronic device has the shortest transmission delay in the three operation modes is determined as the target operation mode.

In step S850, the electronic device adds the Bluetooth service 1, the router 1, an isolation range of the isolation between the first antenna and the second antenna, and the determined target operation mode to the whitelist to update the whitelist.

In this way, because a new combination is added to the whitelist, the whitelist is updated, so that a corresponding operation mode can be effectively and quickly found from the whitelist when the operation mode is determined again subsequently.

In step S860, the electronic device uploads the updated whitelist to a server.

In this way, another electronic device may obtain the updated whitelist from the server, and quickly find a corresponding operation mode by using the updated whitelist. The another electronic device does not need to determine an operation mode according to various determining logic based on factors such as isolation and an operating bandwidth, effectively simplifying a processing process, and improving processing efficiency.

For example, the electronic device may periodically upload the updated whitelist to the server. That is, in this example, the electronic device uploads the whitelist at intervals. Within a periodicity, the whitelist may be updated for a plurality of times. In this way, the updated whitelist is periodically uploaded, avoiding resource overheads caused by uploading the whitelist after each update.

It should be understood that the content of the whitelist described above is only a schematic description and should not constitute a limitation to the embodiments of this application.

In another embodiment, the whitelist may not include the Bluetooth service, that is, the whitelist may include three types of content: a plurality of routers, a plurality of isolation ranges, and three operation modes. The three types of content form N combinations. Each combination includes one router, one isolation range, and a corresponding operation mode. The router and the isolation range in each combination are used to determine the corresponding operation mode. During implementation, when it is determined that the electronic device has a requirement of entering a Bluetooth independent transmission state, in step S820, the electronic device determines whether the router 1 is content in the whitelist. If the router 1 is the content in the whitelist, the electronic device performs step S830, and the electronic device searches the whitelist for the corresponding operation mode based on the isolation between the first antenna and the second antenna and a first router to obtain the target operation mode. If the router 1 is not the content in the whitelist, the electronic device performs step S840, and performs the method 600 to determine the target operation mode, or determines the operation mode with the best transmission performance in the three operation modes as the target operation mode.

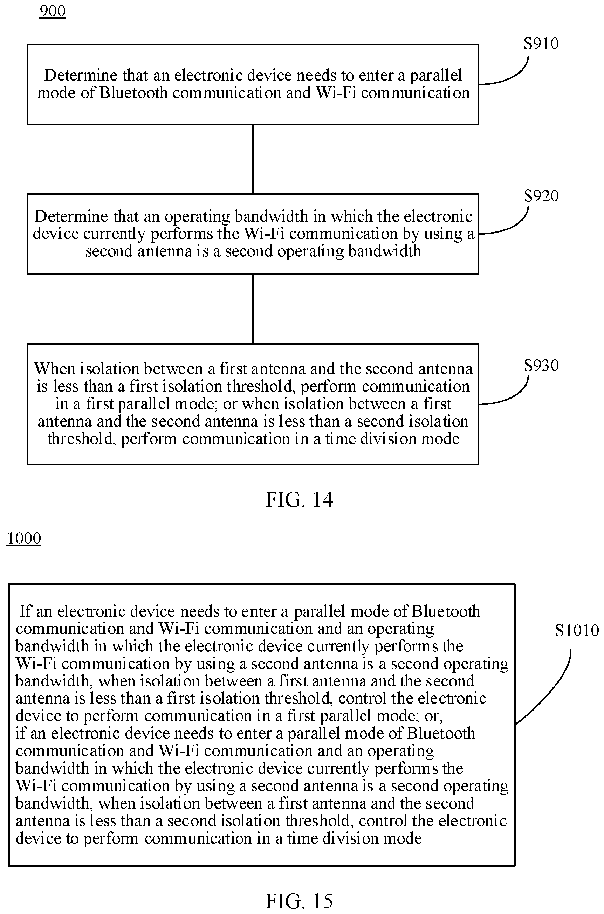

FIG. 14 is a schematic flowchart of a short-distance communication method 900 according to an embodiment of this application. The method 900 is applied to an electronic device. The electronic device is configured with a first antenna and a second antenna. The first antenna is different from the second antenna. The first antenna is used for Bluetooth communication. The second antenna is used for wireless fidelity Wi-Fi communication. The first antenna may include one more antennas. The second antenna includes one more antennas.

In step S910, the electronic device determines that the electronic device needs to enter a parallel mode of the Bluetooth communication and the wireless fidelity Wi-Fi communication. The parallel mode indicates that the Bluetooth communication and the Wi-Fi communication are separately performed by using different antennas, and an operating frequency band of the Bluetooth communication is the same as an operating frequency band of the Wi-Fi communication.

It should be understood that the parallel mode indicates that the electronic device can simultaneously perform the Bluetooth communication and the Wi-Fi communication by using different antennas. The parallel mode includes a first parallel mode and a second parallel mode.

It should be further understood that the electronic device determines that the electronic device needs to enter the parallel mode of the Bluetooth communication and the Wi-Fi communication, or it can be understood that the electronic device determines that the electronic device has a requirement of entering a Bluetooth independent transmission state. The Bluetooth independent transmission state indicates that the electronic device performs the Bluetooth communication by using an antenna different from that used by the Wi-Fi communication. If the electronic device may be allowed, based on an actual situation, to enter the Bluetooth independent transmission state, an operation mode of the electronic device is the parallel mode of the Wi-Fi communication and the Bluetooth communication. For detailed descriptions of the Bluetooth independent transmission state, refer to the related descriptions of step S410. Details are not described again.

For example, the operating frequency band of the Bluetooth communication and the Wi-Fi communication is a 2.4 GHz operating frequency band.

It can be understood that in another example, in a future technology, the operating frequency band of the Bluetooth communication and the Wi-Fi communication may alternatively be another frequency band. This is not limited in this embodiment of this application, provided that the operating frequency band of the Bluetooth communication is the same as the operating frequency band of the Wi-Fi communication.

In step S920, the electronic device determines that an operating bandwidth in which the electronic device currently performs the Wi-Fi communication by using the second antenna is a second operating bandwidth.

In other words, before determining the final operation mode, the electronic device is performing the Wi-Fi communication by using the second antenna, and the operating bandwidth of the Wi-Fi communication is the second operating bandwidth.

It should be noted that before determining the final operation mode, if the electronic device not only performs the Wi-Fi communication but also performs the Bluetooth communication, the electronic device performs communication in a time division mode, to be specific, performs the Bluetooth communication and the Wi-Fi communication by multiplexing the second antenna and the operating bandwidth of the Wi-Fi communication is the second operating bandwidth.

In step S930, when isolation between the first antenna and the second antenna is less than the first isolation threshold, communication is performed in the first parallel mode, where the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
when isolation between the first antenna and the second antenna is less than a second isolation threshold, communication is performed in the time division mode, where the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

If it is set in a system that the electronic device needs to enter the parallel mode (for example, the method 700), when the isolation between the first antenna and the second antenna is less than the first isolation threshold, it means that the isolation between the first antenna and the second antenna is not large enough. Therefore, it is determined that the operation mode of the Bluetooth communication and the Wi-Fi communication is the first parallel mode, and the electronic device performs communication in the first parallel mode. It can be understood that when the isolation between the first antenna and the second antenna is not large enough, to reduce interference, the protection and isolation bandwidth is relatively large. In this case, the operating bandwidth of the Wi-Fi communication may be reduced to provide a suitable bandwidth for the Bluetooth communication. Therefore, the electronic device may perform communication in the first parallel mode. In this way, transmission requirements of the Wi-Fi communication and the Bluetooth communication can be met while the interference can be effectively reduced.

If it is set in the system that the electronic device may perform communication in the time division mode (for example, the method 400 or the method 600) when the requirement of the parallel mode cannot be met, when the isolation between the first antenna and the second antenna is less than the second isolation threshold, it means that the isolation between the first antenna and the second antenna is very small, and the requirement of the parallel mode cannot be met. Therefore, to reduce the interference, communication is performed in the time division mode. In addition, a small-volume electronic device (for example, a mobile phone or a watch) cannot be provided with more antennas. In most cases, performing the Wi-Fi communication and the Bluetooth communication through time division by multiplexing an antenna is also very suitable for the small-volume electronic device.

In some embodiments, the second operating bandwidth is a 40 MHz operating bandwidth, and the first operating bandwidth is a 20 MHz operating bandwidth.

It can be understood that the first operating bandwidth and the second operating bandwidth may be bandwidths of other values. This is not limited in this embodiment of this application, provided that the first operating bandwidth is less than the second operating bandwidth.

It should be noted that in the method 900, the router can support the first operating bandwidth and the second operating bandwidth. Therefore, the electronic device may perform communication in the time division mode or any parallel mode.

According to the short-distance communication method provided in this embodiment of this application, when the operating frequency band of the Wi-Fi communication coincides with the operating frequency band of the Bluetooth communication (for example, the operating frequency band of both the Wi-Fi communication and the Bluetooth communication is a 2.4 GHz operating frequency band), the Bluetooth communication and the Wi-Fi communication are flexibly performed in different operation modes based on the isolation between the first antenna and the second antenna, to be specific, when the isolation between the first antenna and the second antenna is less than the first isolation threshold, communication is performed in the first parallel mode; and when the isolation between the first antenna and the second antenna is less than the second isolation threshold, communication is performed in the time division mode. Because isolation between antennas greatly affects the transmission performance of communication, an operation mode of the Bluetooth communication and the Wi-Fi communication is determined based on the isolation between the antennas. In this way, communication is performed in different operation modes with different isolation, so that interference between the Wi-Fi communication and the Bluetooth communication can be reduced as much as possible to maintain relatively good transmission performance, not only improving system flexibility, but also improving system stability. In addition, when it is determined that the electronic device has a requirement of entering the parallel mode, a suitable operation mode is determined based on isolation, avoiding invalid operations, and improving practicality.

In some embodiments, the method 900 further includes: When the isolation between the first antenna and the second antenna is greater than the first isolation threshold, the electronic device performs communication in the second parallel mode. The second parallel mode indicates that the Bluetooth communication is performed by using the first antenna and the Wi-Fi communication is performed by using the second antenna, and the operating bandwidth of the Wi-Fi communication is the second operating bandwidth.

It can be understood that regardless of whether it is set in the system that the electronic device needs to enter the parallel mode or it is set in the system that the electronic device may perform communication in the parallel mode or the time division mode based on an actual situation, when the isolation between the first antenna and the second antenna is greater than the first isolation threshold, the electronic device performs communication in the second parallel mode.

When the isolation between the first antenna and the second antenna is equal to the first isolation threshold, the electronic device may perform communication in the second parallel mode, or may perform communication in the first parallel mode. This is not limited herein.

In this embodiment, when the isolation between the first antenna and the second antenna is greater than the first isolation threshold, it means that the isolation between the first antenna and the second antenna is large enough. Therefore, it is determined that the operation mode of the Bluetooth communication and the Wi-Fi communication is the second parallel mode, and the electronic device performs communication in the second parallel mode. It can be understood that when the isolation between the first antenna and the second antenna is large enough, the protection and isolation bandwidth is relatively small. In this way, even if the operating bandwidth of the Wi-Fi communication is the second operating bandwidth which is a large bandwidth, a suitable bandwidth can be provided for the Bluetooth communication. Therefore, transmission requirements of the Wi-Fi communication and the Bluetooth communication can be met while the interference can be effectively reduced. In addition, the Wi-Fi communication can benefit from a large bandwidth.

In step S930, the electronic device performs communication in the first parallel mode. In some embodiments, when the isolation between the first antenna and the second antenna is less than the first isolation threshold and is greater than the second isolation threshold, communication is performed in the first parallel mode.

In this embodiment, the electronic device is configured with the first isolation threshold and the second isolation threshold. When the isolation between the first antenna and the second antenna is less than the first isolation threshold and is greater than the second isolation threshold, the electronic device determines that the operation mode of the Bluetooth communication and the Wi-Fi communication is the first parallel mode, and performs communication in the first parallel mode.

With reference to the embodiment in which the isolation between the first antenna and the second antenna is less than the second isolation threshold, when the isolation between the first antenna and the second antenna is less than the second isolation threshold, the electronic device determines that the operation mode of the Bluetooth communication and the Wi-Fi communication is the time division mode, and performs communication in the time division mode.

With reference to the embodiment in which the isolation between the first antenna and the second antenna is greater than the first isolation threshold, when the isolation between the first antenna and the second antenna is greater than the first isolation threshold, the electronic device determines that the operation mode of the Bluetooth communication and the Wi-Fi communication is the second parallel mode, and performs communication in the second parallel mode.

When the isolation between the first antenna and the second antenna is equal to the second isolation threshold, the electronic device may perform communication in the first parallel mode, or may perform communication in the time division mode. This is not limited herein.

For detailed descriptions of the relationship between the isolation between the first antenna and the second antenna and the first isolation threshold or the second isolation threshold, refer to the related descriptions of the method 400. Details are not described herein again.

According to the short-distance communication method provided in this embodiment of this application, two isolation thresholds are designed. When the isolation between the first antenna and the second antenna is less than the first isolation threshold and is greater than the second isolation threshold, communication is performed in the first parallel mode, avoiding an interference problem possibly caused by communication performed in the first parallel mode when the isolation between the first antenna and the second antenna is too small, further improving the transmission performance.

In step S910, in some embodiments, when the communication status of the electronic device meets a first preset condition, the electronic device determines that the electronic device needs to enter the parallel mode. The first preset condition includes any one of the following:

The electronic device performs the Wi-Fi communication by using the second antenna and is to perform the Bluetooth communication; or
the electronic device performs the Wi-Fi communication and the Bluetooth communication through time division by multiplexing the second antenna; or
the electronic device performs the Wi-Fi communication and the Bluetooth communication through time division by multiplexing the second antenna, and a priority of a currently performed Bluetooth service is lower than a priority of a to-be-performed Bluetooth service.

When the electronic device performs the Wi-Fi communication by using the second antenna and is to perform the Bluetooth communication, it means that the electronic device subsequently needs to perform both the Bluetooth communication and the Wi-Fi communication, and therefore, may determine that the electronic device needs to enter the parallel mode.

When the electronic device performs the Wi-Fi communication and the Bluetooth communication through time division by multiplexing the second antenna, the electronic device may determine that the electronic device needs to enter the parallel mode. Generally, if the isolation allows, the transmission performance in the parallel mode is better than that in the time division mode. Therefore, to attempt to obtain better transmission performance, the electronic device determines that the electronic device needs to enter the parallel mode.

When the electronic device performs the Wi-Fi communication and the Bluetooth communication through time division by multiplexing the second antenna, and the priority of the currently performed Bluetooth service is lower than the priority of the to-be-performed Bluetooth service, the electronic device may determine that the electronic device needs to enter the parallel mode. For detailed descriptions of the Bluetooth service and the priority of the Bluetooth service, refer to the related descriptions of step S410. Details are not described again.

According to the short-distance communication method provided in this embodiment of this application, by determining the first preset condition, when the communication status of the electronic device meets the first preset condition, it is determined that the electronic device needs to enter the parallel mode. A common application scenario is considered, and applicability is relatively good.

In some embodiments, after step S930, the method 900 further includes:
When the communication status of the electronic device meets a second preset condition, the electronic device determines to exit the first parallel mode; and
the electronic device sets the operating bandwidth of the Wi-Fi communication to the second operating bandwidth.

When communication is performed in the first parallel mode, the operating bandwidth of the Wi-Fi communication is the first operating bandwidth (for example, 20 MHz). After it is determined to exit the first parallel mode, it means that the Bluetooth communication does not need to preempt resources or preempts a very small quantity of resources with the Wi-Fi communication, and transmission of the Wi-Fi communication is not affected. Therefore, to enable the Wi-Fi communication to benefit from a large bandwidth as much as possible, the operating bandwidth of the Wi-Fi communication is changed from the first operating bandwidth (for example, 20 MHz) to the second operating bandwidth (for example, 40 MHz), so that the continuously performed Wi-Fi communication can benefit from the large bandwidth.

For detailed descriptions of the step in which the electronic device sets the operating bandwidth of the Wi-Fi communication to the second operating bandwidth, refer to the related descriptions of step S450 above. For brevity, details are not described again. The only difference lies in that in step S450, the operating bandwidth of the Wi-Fi communication is set to the first operating bandwidth (for example, 20 MHz); and herein, the operating bandwidth of the Wi-Fi communication is set to the second operating bandwidth (for example, 40 MHz).

In some embodiments, the second preset condition includes any one of the following:
The electronic device stops the Bluetooth communication; or
the electronic device performs communication in the first parallel mode, and the priority of the currently performed Bluetooth service is higher than the priority of the to-be-performed Bluetooth service.

In another embodiment, the second preset condition may further include any other content. This is not limited in this embodiment of this application, provided that the electronic device can be triggered to exit the first parallel mode.

In the embodiment in which the electronic device determines to exit the first parallel mode when the electronic device stops the Bluetooth communication, after exiting the first parallel mode, the electronic device no longer performs the Bluetooth communication, and may continue to perform the Wi-Fi communication on the second operating bandwidth by using the second antenna.

In the embodiment in which the electronic device determines to exit the first parallel mode when the electronic device performs communication in the first parallel mode and the priority of the currently performed Bluetooth service is higher than the priority of the to-be-performed Bluetooth service, after exiting the first parallel mode, the electronic device continues to perform the Wi-Fi communication and the Bluetooth communication, and may perform communication in the time division mode.

In some embodiments, the method 900 further includes: The electronic device determines the isolation between the first antenna and the second antenna based on configuration information, where the configuration information indicates isolation between antennas configured in the electronic device.

In this embodiment of this application, the electronic device includes a Wi-Fi module and a first processing module. Based on different cases, the Wi-Fi module or the first processing module both can determine the isolation between the first antenna and the second antenna based on the configuration information to determine the operation mode of the Wi-Fi communication and the Bluetooth communication, so that the electronic device performs communication in different operation modes.

It should be understood that the first processing module is a processing module other than the Wi-Fi module, for example, an AP.

In an example, as described above, the Wi-Fi module and the Bluetooth module are integrated into one chip, and the chip may be referred to as a Wi-Fi Bluetooth chip. In another embodiment, the Wi-Fi module may alternatively be independently integrated into one chip.

The following describes in detail, based on a case 1 and a case 2, a process in which the Wi-Fi module or the first processing module determines the isolation between the first antenna and the second antenna based on the configuration information, so that the electronic device performs communication in different operation modes.

In the case 1, the first processing module (for example, the AP) determines the isolation between the first antenna and the second antenna based on the configuration information, so that the electronic device performs communication in different operation modes.

In an example, the Wi-Fi module is configured with the configuration information, and the method 900 further includes:
The first processing module receives the configuration information sent by the Wi-Fi module.

The determining isolation between the first antenna and the second antenna based on configuration information includes:
The first processing module determines the isolation between the first antenna and the second antenna based on the configuration information.

That is, the first processing module obtains the configuration information from the Wi-Fi module to determine the isolation between the first antenna and the second antenna.

In another example, the first processing module is configured with the configuration information. In this case, the first processing module may read the configuration information from the first processing module to determine the isolation between the first antenna and the second antenna.

In the embodiment in which the electronic device performs communication in the first parallel mode based on the isolation in step S930, for example, when the isolation between the first antenna and the second antenna is less than the first isolation threshold, the first processing module determines that the operation mode of the Bluetooth communication and the Wi-Fi communication is the first parallel mode.

The first processing module sends first bandwidth information to the Wi-Fi module, where the first bandwidth information indicates the first operating bandwidth.

The Wi-Fi module sets the operating bandwidth of the Wi-Fi communication to the first operating bandwidth, so that the electronic device performs communication in the first parallel mode.

That is, in this embodiment, after determining the first parallel mode, the first processing module sends, to the Wi-Fi module, the first bandwidth information indicating the first operating bandwidth of the first parallel mode. The Wi-Fi module changes the original second operating bandwidth to the first operating bandwidth. In this way, the electronic device may perform communication in the first parallel mode.

In the embodiment in which the electronic device performs communication in the time division mode based on the isolation in step S930, for example, when the isolation between the first antenna and the second antenna is less than the second isolation threshold, the first processing module determines that the operation mode of the Bluetooth communication and the Wi-Fi communication is the time division mode.

The first processing module sends second bandwidth information to the Wi-Fi module, where the second bandwidth information indicates the second operating bandwidth.

The Wi-Fi module maintains the operating bandwidth of the Wi-Fi communication as the second operating bandwidth, so that the electronic device performs communication in the time division mode.

That is, in this embodiment, after determining the time division mode, the first processing module sends, to the Wi-Fi module, the second bandwidth information indicating the second operating bandwidth of the time division mode. Because the current operating bandwidth of the Wi-Fi communication is already the second operating bandwidth, the operating bandwidth of the Wi-Fi communication does not need to be set, and the second operating bandwidth continues to be maintained as the operating bandwidth of the Wi-Fi communication. In this way, the electronic device may perform communication in the time division mode.

In the embodiment in which the electronic device performs communication in the second parallel mode based on the isolation, for example, when the isolation between the first antenna and the second antenna is greater than the first isolation threshold, the first processing module determines that the operation mode of the Bluetooth communication and the Wi-Fi communication is the second parallel mode.

The first processing module sends second bandwidth information to the Wi-Fi module, where the second bandwidth information indicates the second operating bandwidth.

The Wi-Fi module maintains the operating bandwidth of the Wi-Fi communication as the second operating bandwidth, so that the electronic device performs communication in the second parallel mode.

That is, in this embodiment, after determining the second parallel mode, the first processing module sends, to the Wi-Fi module, the second bandwidth information indicating the second operating bandwidth of the second parallel mode. Because the current operating bandwidth of the Wi-Fi communication is already the second operating bandwidth, the operating bandwidth of the Wi-Fi communication does not need to be set, and the second operating bandwidth continues to be maintained as the operating bandwidth of the Wi-Fi communication. In this way, the electronic device may perform communication in the second parallel mode.

In the case 2, the Wi-Fi module determines the isolation between the first antenna and the second antenna based on the configuration information, so that the electronic device performs communication in different operation modes.

In an example, the first processing module is configured with the configuration information, and the method 900 further includes:
The Wi-Fi module receives the configuration information sent by the first processing module.

The determining isolation between the first antenna and the second antenna based on configuration information includes:
The Wi-Fi module determines the isolation between the first antenna and the second antenna based on the configuration information.

That is, the Wi-Fi module obtains the configuration information from the first processing module to determine the isolation between the first antenna and the second antenna.

In another example, the Wi-Fi module is configured with the configuration information. In this case, the Wi-Fi module may read the configuration information from the Wi-Fi module to determine the isolation between the first antenna and the second antenna.

In the embodiment in which the electronic device performs communication in the first parallel mode based on the isolation in step S930, for example, when the isolation between the first antenna and the second antenna is less than the first isolation threshold, the Wi-Fi module determines that the operation mode of the Bluetooth communication and the Wi-Fi communication is the first parallel mode.

The Wi-Fi module sets the operating bandwidth of the Wi-Fi communication to the first operating bandwidth, so that the electronic device performs communication in the first parallel mode.

That is, in this embodiment, after the Wi-Fi module determines the first parallel mode, the Wi-Fi module changes the original second operating bandwidth to the first operating bandwidth. In this way, the electronic device may perform communication in the first parallel mode.

In the embodiment in which the electronic device performs communication in the time division mode based on the isolation in step S930, for example, when the isolation between the first antenna and the second antenna is less than the second isolation threshold, the Wi-Fi module determines that the operation mode of the Bluetooth communication and the Wi-Fi communication is the time division mode.

The Wi-Fi module maintains the operating bandwidth of the Wi-Fi communication as the second operating bandwidth, so that the electronic device performs communication in the time division mode.

That is, in this embodiment, after the Wi-Fi module determines the time division mode, because the current operating bandwidth of the Wi-Fi communication is already the second operating bandwidth, the operating bandwidth of the Wi-Fi communication does not need to be set, and the second operating bandwidth continues to be maintained as the operating bandwidth of the Wi-Fi communication. In this way, the electronic device may perform communication in the time division mode.

In the embodiment in which the electronic device performs communication in the second parallel mode based on the isolation, for example, when the isolation between the first antenna and the second antenna is greater than the first isolation threshold, the Wi-Fi communication determines that the operation mode of the Bluetooth communication and the Wi-Fi communication is the second parallel mode.

The Wi-Fi module maintains the operating bandwidth of the Wi-Fi communication as the second operating bandwidth, so that the electronic device performs communication in the second parallel mode.

That is, in this embodiment, after the Wi-Fi module determines the second parallel mode, because the current operating bandwidth of the Wi-Fi communication is already the second operating bandwidth, the operating bandwidth of the Wi-Fi communication does not need to be set, and the second operating bandwidth continues to be maintained as the operating bandwidth of the Wi-Fi communication. In this way, the electronic device may perform communication in the second parallel mode.

It should be understood that the manner for determining the isolation between the first antenna and the second antenna based on the configuration information is only a schematic description and should not constitute a limitation to the embodiments of this application. In another embodiment, the electronic device may further determine the isolation between the first antenna and the second antenna based on a ratio of a power of a signal transmitted by one of the first antenna and the second antenna to a power of a signal received by the other antenna. A larger ratio of a transmitted signal of one antenna to an output attenuation degree of the other antenna indicates better isolation.

In some other embodiments, the first antenna is further used for cellular communication.

Because there are many cellular antennas in a cellular module in an existing mobile phone, Bluetooth is allowed to multiplex a cellular antenna, and the Bluetooth communication is performed by using a cellular antenna. Therefore, the Bluetooth communication and the Wi-Fi communication can operate in parallel without adding an antenna, that is, the electronic device can perform the Bluetooth communication and the Wi-Fi communication in parallel. This design not only reduces costs, but also does not need to additionally occupy space of the electronic device, and does not affect an appearance design and product stability of the electronic device.

In some other embodiments, the first antenna is an antenna used only by the Bluetooth communication, and is dedicated to the Bluetooth communication.

This design is applicable to an electronic device having relatively large space. By performing communication by using a dedicated Bluetooth antenna, a problem of preempting resources of another antenna can be avoided.

FIG. 15 is a schematic flowchart of a short-distance communication method 1000 according to an embodiment of this application. The method 1000 is applied to a chip. The chip is configured in an electronic device, the electronic device is configured with a first antenna and a second antenna, and the first antenna is different from the second antenna. For detailed descriptions of the first antenna and the second antenna, refer to the related descriptions of the method 900. Details are not described again.

In step S1010, if the electronic device needs to enter a parallel mode of Bluetooth communication and wireless fidelity Wi-Fi communication and an operating bandwidth in which the electronic device currently performs the Wi-Fi communication by using the second antenna is a second operating bandwidth, when isolation between the first antenna and the second antenna is less than a first isolation threshold, the chip controls the electronic device to perform communication in a first parallel mode, where the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
if the electronic device needs to enter the parallel mode and the operating bandwidth in which the electronic device currently performs the Wi-Fi communication by using the second antenna is the second operating bandwidth, when the isolation between the first antenna and the second antenna is less than a second isolation threshold, the chip controls the electronic device to perform communication in a time division mode, where the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

The parallel mode indicates that the Bluetooth communication and the Wi-Fi communication are separately performed by using different antennas.

It can be understood that a process of determining that the electronic device needs to enter the parallel mode of the Bluetooth communication and the wireless fidelity Wi-Fi communication and determining that the operating bandwidth in which the electronic device currently performs the Wi-Fi communication by using the second antenna is the second operating bandwidth may be performed by the foregoing chip, or may be performed by another chip or a processing module. This is not limited in this embodiment of this application.

In some embodiments, the first operating bandwidth is 20 MHz, and the second operating bandwidth is 40 MHz.

In some embodiments, the method 1000 further includes:
If the electronic device needs to enter the parallel mode and an operating bandwidth in which the electronic device currently performs the Wi-Fi communication by using the second antenna is the first operating bandwidth, when isolation between the first antenna and the second antenna is greater than the first isolation threshold, the chip controls the electronic device to perform communication in a second parallel mode, where the second parallel mode indicates that the Bluetooth communication is performed by using the first antenna and the Wi-Fi communication is performed by using the second antenna, and the operating bandwidth of the Wi-Fi communication is the second operating bandwidth.

In some embodiments, the controlling the electronic device to perform communication in the first parallel mode includes:
If the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold and is greater than the second isolation threshold, the chip controls the electronic device to perform communication in the first parallel mode.

In some embodiments, the method 1000 further includes:
determining the isolation between the first antenna and the second antenna based on configuration information, where the configuration information indicates isolation between antennas configured in the electronic device.

In some embodiments, the chip includes a first processing module, and the electronic device includes a Wi-Fi module; and the method 1000 further includes:
The first processing module receives the configuration information sent by the Wi-Fi module.

The determining isolation between the first antenna and the second antenna based on configuration information includes:
The first processing module determines the isolation between the first antenna and the second antenna based on the configuration information.

In some embodiments, the controlling the electronic device to perform communication in the first parallel mode includes:
If the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold, the first processing module determines that an operation mode of the Bluetooth communication and the Wi-Fi communication is the first parallel mode; and
the first processing module sends first bandwidth information to the Wi-Fi module, where the first bandwidth information indicates the first operating bandwidth, so that the Wi-Fi module sets the operating bandwidth of the Wi-Fi communication to the first operating bandwidth to control the electronic device to perform communication in the first parallel mode.

In some embodiments, the controlling the electronic device to perform communication in a time division mode includes:
If the electronic device needs to enter the parallel mode and the operating bandwidth in which the electronic device currently performs the Wi-Fi communication by using the second antenna is the second operating bandwidth, when the isolation between the first antenna and the second antenna is less than the second isolation threshold, the first processing module determines that an operation mode of the Bluetooth communication and the Wi-Fi communication is the time division mode; and
the first processing module sends second bandwidth information to the Wi-Fi module, where the second bandwidth information indicates the second operating bandwidth, so that the Wi-Fi module maintains the operating bandwidth of the Wi-Fi communication as the second operating bandwidth to control the electronic device to perform communication in the time division mode.

In some embodiments, the chip includes a Wi-Fi module, and the electronic device includes a first processing module; and the method 1000 further includes:
The Wi-Fi module receives the configuration information sent by the first processing module.

The determining isolation between the first antenna and the second antenna based on configuration information includes:
The Wi-Fi module determines the isolation between the first antenna and the second antenna based on the configuration information.

In some embodiments, the controlling the electronic device to perform communication in the first parallel mode includes:
If the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold, the Wi-Fi module determines that an operation mode of the Bluetooth communication and the Wi-Fi communication is the first parallel mode; and
the Wi-Fi module sets the operating bandwidth of the Wi-Fi communication to the first operating bandwidth, so that the electronic device performs communication in the first parallel mode.

In some embodiments, the controlling the electronic devices to perform communication in the time division mode includes:
If the electronic device needs to enter the parallel mode and the operating bandwidth in which the electronic device currently performs the Wi-Fi communication by using the second antenna is the second operating bandwidth, when the isolation between the first antenna and the second antenna is less than the second isolation threshold, the Wi-Fi module determines that an operation mode of the Bluetooth communication and the Wi-Fi communication is the time division mode; and
the Wi-Fi module maintains the operating bandwidth of the Wi-Fi communication as the second operating bandwidth, so that the electronic device performs communication in the time division mode.

In the foregoing related embodiment, for example, the chip may be an AP. For example, the Wi-Fi module may be a a Wi-Fi module in a Wi-Fi Bluetooth chip integrated with a Wi-Fi module and a Bluetooth module.

It should be noted that the first processing module and the Wi-Fi module in the method 1000 may be respectively similar to the first processing module and the Wi-Fi module in the method 900. For detailed descriptions, refer to the related descriptions of the method 900. Details are not described again.

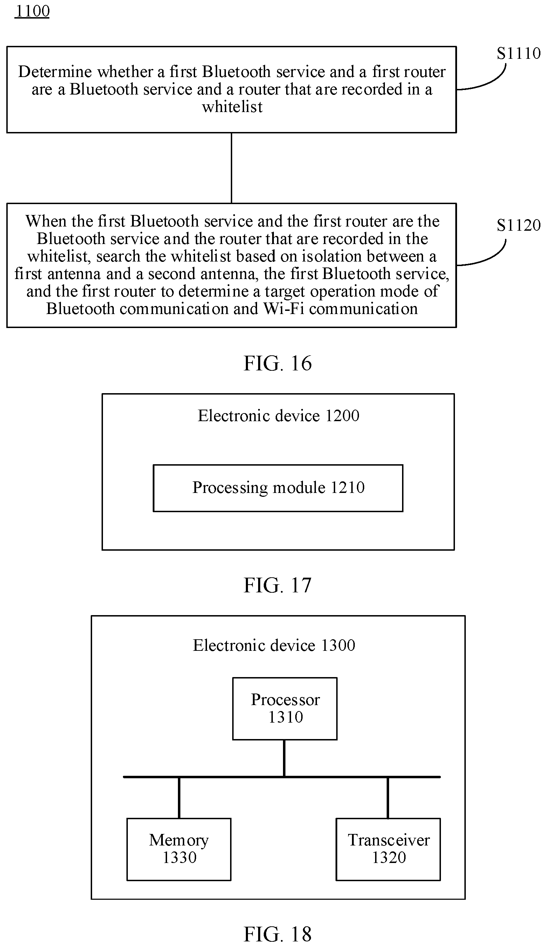

FIG. 16 is a schematic flowchart of a short-distance communication method 1100 according to an embodiment of this application. The method 1100 is applied to an electronic device. The electronic device is configured with a first antenna and a second antenna. The first antenna is different from the second antenna. For detailed descriptions of the first antenna and the second antenna, refer to the related descriptions of the method 900. Details are not described again.

In step S1110, the electronic device determines whether a first Bluetooth service and a first router are a Bluetooth service and a router that are recorded in a whitelist, where the first Bluetooth service is a to-be-performed service or an ongoing service, and the first router is configured to provide a Wi-Fi network. For detailed descriptions of this step, refer to the related descriptions of step S820. Details are not described again. The first Bluetooth service is similar to the Bluetooth service 1. The first router is similar to the router 1.

In step S1120, when the first Bluetooth service and the first router are the Bluetooth service and the router that are recorded in the whitelist, the electronic device searches the whitelist based on isolation between the first antenna and the second antenna, the first Bluetooth service, and the first router to determine a target operation mode of Bluetooth communication and Wi-Fi communication, where an operating frequency band of the Wi-Fi communication is the same as an operating frequency band of the Bluetooth communication.

The whitelist includes four types of content; the four types of content include: a plurality of Bluetooth services, a plurality of routers, a plurality of isolation ranges, and three operation modes; the four types of content form M combinations; each combination includes: one Bluetooth service, one router, one isolation range, and one operation mode; the Bluetooth service, the router, and the isolation range in each combination are used to determine a corresponding operation mode; and the target operation mode is any one of the three operation modes.

The three operation modes include: a time division mode, a first parallel mode, and a second parallel mode; the time division mode indicates that the Bluetooth communication and the Wi-Fi communication are performed through time division by multiplexing the second antenna, and an operating bandwidth of the Wi-Fi communication is a second operating bandwidth; the first parallel mode indicates that the Bluetooth communication is performed by using the first antenna and the Wi-Fi communication is performed by using the second antenna, and the operating bandwidth of the Wi-Fi communication is a first operating bandwidth; the second parallel mode indicates that the Bluetooth communication is performed by using the first antenna and the Wi-Fi communication is performed by using the second antenna, and the operating bandwidth of the Wi-Fi communication is the second operating bandwidth; and the second operating bandwidth is greater than the first operating bandwidth.

For detailed descriptions of this step, refer to the related descriptions of step S830. Details are not described again.

After the electronic device determines the target operation mode of the Bluetooth communication and the Wi-Fi communication, the electronic device may perform communication in the target operation mode.

According to the short-distance communication method provided in this embodiment of this application, a whitelist is introduced. M combinations are formed in the whitelist. Each combination includes one Bluetooth service, one router, one isolation range, and one operation mode. The Bluetooth service, the router, and the isolation range in each combination are used to determine a corresponding operation mode. In this way, if the first Bluetooth service and the first router are content recorded in the whitelist, the electronic device can determine a target operation mode corresponding to a current state of the electronic device from the whitelist based on the first Bluetooth service, the first router, and the isolation between the first antenna and the second antenna. In this way, the target operation mode determined based on a plurality of dimensions (the router, the Bluetooth service, and the isolation) can reduce interference between the Wi-Fi communication and the Bluetooth communication as much as possible to maintain relatively good transmission performance, not only improving system flexibility, but also improving system stability. In addition, because a corresponding target operation mode can be found quickly based on content of the whitelist, a processing process can be effectively simplified, improving processing efficiency.

In some embodiments, before step S1110, the method 1100 further includes:
The electronic device determines that a communication status of the electronic device meets a first preset condition, where the first preset condition includes any one of the following:
The electronic device performs the Wi-Fi communication by using the second antenna and is to perform the Bluetooth communication; or
the electronic device performs the Wi-Fi communication and the Bluetooth communication through time division by multiplexing the second antenna; or
the electronic device performs the Wi-Fi communication and the Bluetooth communication through time division by multiplexing the second antenna, and a priority of a currently performed Bluetooth service is lower than a priority of a to-be-performed Bluetooth service.

For detailed descriptions of the first preset condition, refer to the related descriptions of the first preset condition in the method 900. Details are not described again.

In some embodiments, the target operation mode is the first parallel mode, and the method 1100 further includes:
When the communication status of the electronic device meets a second preset condition, the electronic device determines to exit the first parallel mode; and
the electronic device sets the operating bandwidth of the Wi-Fi communication to the second operating bandwidth.

For detailed descriptions of this step, refer to the related descriptions of the electronic device in the method 900. Details are not described again.

In some embodiments, the second preset condition includes any one of the following:
The electronic device stops the Bluetooth communication; or
the electronic device performs communication in the first parallel mode, and the priority of the currently performed Bluetooth service is higher than the priority of the to-be-performed Bluetooth service.

For detailed descriptions of the second preset condition, refer to the related descriptions of the second preset condition in the method 900. Details are not described again.

In some embodiments, the method 1100 further includes: The electronic device obtains the whitelist from a server.

In some embodiments, the first operating bandwidth is 20 MHz, and the second operating bandwidth is 40 MHz.

In some embodiments, if the first Bluetooth service and the first router are not content recorded in the whitelist, the electronic device performs the method 600 to determine the target operation mode, or the electronic device determines an operation mode with best performance in the three operation modes as the target operation mode.

For detailed descriptions of this embodiment, refer to the related descriptions of step S840. Details are not described again.

In the foregoing embodiment in which the first Bluetooth service and the first router are not content recorded in the whitelist, the method 900 further includes:

The electronic device adds the first Bluetooth service, the first router, the isolation range of the isolation between the first antenna and the second antenna, and the target operation mode to the whitelist to update the whitelist.

It should be understood that the first Bluetooth service, the first router, the isolation range of the isolation between the first antenna and the second antenna, and the target operation mode are added to the whitelist as a new combination to form the updated whitelist.

For detailed descriptions of this step, refer to the related descriptions of step S850 above. Details are not described again.

According to the short-distance communication method provided in this embodiment of this application, after the target operation mode is determined, the related content is added to the whitelist. Because the new combination is added to the whitelist to update the whitelist, when the electronic device subsequently determines the operation mode again, if the Bluetooth service is the first Bluetooth service and the router is the first router, the electronic device may quickly find the corresponding operation mode from the whitelist, further simplifying the processing process, and improving the processing efficiency.

In the foregoing embodiment of updating the whitelist, the method 900 further includes: The electronic device sends the updated whitelist to the server. For detailed descriptions of this step, refer to the related descriptions of step S860 above. Details are not described again.

According to the short-distance communication method provided in this embodiment of this application, the electronic device uploads the updated whitelist to the server. In this way, another electronic device may obtain the updated whitelist from the server, and quickly find a corresponding operation mode by using the updated whitelist. The another electronic device does not need to determine an operation mode according to various determining logic based on factors such as isolation and an operating bandwidth, effectively simplifying a processing process, and improving processing efficiency. The short-distance communication method provided in embodiments of this application is described above in detail with reference to FIG. 1 to FIG. 16. An electronic device provided in the embodiments of this application is described below in detail with reference to FIG. 17 and FIG. 18.

FIG. 17 is an example block diagram of an electronic device 1200 according to an embodiment of this application. The electronic device 1200 includes a processing module 1210.

In a possible implementation, the electronic device 1200 is configured to perform the procedures and the steps corresponding to the electronic device in the foregoing method 900. The processing module 1210 is configured to control the electronic device to perform the following steps:
determining that the electronic device needs to enter a parallel mode of Bluetooth communication and wireless fidelity Wi-Fi communication, where the parallel mode indicates that the Bluetooth communication and the Wi-Fi communication are separately performed by using different antennas, and an operating frequency band of the Bluetooth communication is the same as an operating frequency band of the Wi-Fi communication;
determining that an operating bandwidth in which the electronic device currently performs the Wi-Fi communication by using the second antenna is a second operating bandwidth; and
performing communication in a first parallel mode when isolation between the first antenna and the second antenna is less than a first isolation threshold, where the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
performing communication in a time division mode when isolation between the first antenna and the second antenna is less than a second isolation threshold, where the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

It should be understood that the processing unit 1210 may be configured to perform the steps performed by the electronic device in the method 900. For detailed descriptions, refer to the related descriptions above. Details are not described again.

It should be noted that the first processing module or the Wi-Fi module in the method 900 may be the processing module 1210 herein.

In another possible implementation, the electronic device 1200 is configured to perform the procedures and the steps corresponding to the chip in the foregoing method 1000. The processing module 1210 is configured to perform the following steps:
if the electronic device needs to enter a parallel mode of Bluetooth communication and wireless fidelity Wi-Fi communication and an operating bandwidth in which the electronic device currently performs the Wi-Fi communication by using the second antenna is a second operating bandwidth, when isolation between the first antenna and the second antenna is less than a first isolation threshold, controlling the electronic device to perform communication in a first parallel mode, where the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
if the electronic device needs to enter the parallel mode and the operating bandwidth in which the electronic device currently performs the Wi-Fi communication by using the second antenna is the second operating bandwidth, when the isolation between the first antenna and the second antenna is less than a second isolation threshold, controlling the electronic device to perform communication in a time division mode, where the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

The parallel mode indicates that the Bluetooth communication and the Wi-Fi communication are separately performed by using different antennas.

It should be understood that the processing unit 1210 may be configured to perform the steps performed by the chip in the method 1000. For detailed descriptions, refer to the related descriptions above. Details are not described again.

It should be noted that the first processing module or the Wi-Fi module in the method 1000 may be the processing module 1210 herein.

In another possible implementation, the electronic device 1200 is configured to perform the procedures and the steps corresponding to the electronic device in the foregoing method 1100. The processing module 1210 is configured to control the electronic device to perform the following steps:
determining whether a first Bluetooth service and a first router are a Bluetooth service and a router that are recorded in a whitelist, where the first Bluetooth service is a to-be-performed service or an ongoing service, and the first router is configured to provide a Wi-Fi network; and
when the first Bluetooth service and the first router are the Bluetooth service and the router that are recorded in the whitelist, searching the whitelist based on isolation between the first antenna and the second antenna, the first Bluetooth service, and the first router to determine a target operation mode of Bluetooth communication and Wi-Fi communication, where an operating frequency band of the Wi-Fi communication is the same as an operating frequency band of the Bluetooth communication.

The whitelist includes four types of content; the four types of content include: a plurality of Bluetooth services, a plurality of routers, a plurality of isolation ranges, and three operation modes; the four types of content form M combinations; each combination includes: one Bluetooth service, one router, one isolation range, and one operation mode; the Bluetooth service, the router, and the isolation range in each combination are used to determine a corresponding operation mode; and the target operation mode is any one of the three operation modes.

The three operation modes include: a time division mode, a first parallel mode, and a second parallel mode; the time division mode indicates that the Bluetooth communication and the Wi-Fi communication are performed through time division by multiplexing the second antenna, and an operating bandwidth of the Wi-Fi communication is a second operating bandwidth; the first parallel mode indicates that the Bluetooth communication is performed by using the first antenna and the Wi-Fi communication is performed by using the second antenna, and the operating bandwidth of the Wi-Fi communication is a first operating bandwidth; the second parallel mode indicates that the Bluetooth communication is performed by using the first antenna and the Wi-Fi communication is performed by using the second antenna, and the operating bandwidth of the Wi-Fi communication is the second operating bandwidth; and the second operating bandwidth is greater than the first operating bandwidth.

It should be understood that the processing unit 1210 may be configured to perform the steps performed by the electronic device in the method 1100. For detailed descriptions, refer to the related descriptions above. Details are not described again.

It should be understood that the electronic device 1200 herein is embodied in a form of functional units. The term "unit" herein may refer to an application-specific integrated circuit (application specific integrated circuit, ASIC), an electronic circuit, a processor (for example, a shared processor, a dedicated processor, or a group processor) configured to execute one or more software or firmware programs, a memory, a combined logic circuit, and/or another suitable component that supports the described functions.

In this embodiment of this application, the electronic device in FIG. 17 may alternatively be a chip or a chip system, for example, a system on chip (system on chip, SoC).

FIG. 18 is a diagram of a structure of an electronic device 1300 according to an embodiment of this application. The electronic device 1300 includes a processor 1310, a transceiver 1320, and a memory 1330. The processor 1310, the transceiver 1320, and the memory 1330 communicate with each other through an internal connection path. The processor 1310 may implement the functions of the processor 1310 in various possible implementations of the electronic device 1300. The memory 1330 is configured to store instructions. The processor 1310 is configured to execute the instructions stored in the memory 1330, in other words, the processor 1310 may invoke these stored instructions to implement the functions of the processor 1310 in the electronic device 1300.

Optionally, the memory 1330 may include a read-only memory and a random access memory, and provide instructions and data for the processor. A part of the memory may further include a non-volatile random access memory. For example, the memory may further store information about a device type. The processor 1310 may be configured to execute the instructions stored in the memory, and when the processor 1310 executes the instructions stored in the memory, the processor 1310 is configured to perform the steps and/or procedures of the foregoing method embodiments corresponding to the terminal device.

In a possible implementation, the electronic device 1300 is configured to perform the procedures and the steps corresponding to the electronic device in the foregoing method 900. The processor 1310 is configured to control the electronic device to perform the following steps:
determining that the electronic device needs to enter a parallel mode of Bluetooth communication and wireless fidelity Wi-Fi communication, where the parallel mode indicates that the Bluetooth communication and the Wi-Fi communication are separately performed by using different antennas, and an operating frequency band of the Bluetooth communication is the same as an operating frequency band of the Wi-Fi communication;
determining that an operating bandwidth in which the electronic device currently performs the Wi-Fi communication by using the second antenna is a second operating bandwidth; and
performing communication in a first parallel mode when isolation between the first antenna and the second antenna is less than a first isolation threshold, where the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
performing communication in a time division mode when isolation between the first antenna and the second antenna is less than a second isolation threshold, where the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

It should be understood that the processor 1310 may be configured to perform the steps performed by the electronic device in the method 900. For detailed descriptions, refer to the related descriptions above. Details are not described again.

It should be noted that the first processing module or the Wi-Fi module in the method 900 may be some or all of functional modules in the processor 1310 herein.

In another possible implementation, the electronic device 1300 is configured to perform the procedures and the steps corresponding to the chip in the foregoing method 1000. The processor 1310 is configured to perform the following steps:
if the electronic device needs to enter a parallel mode of Bluetooth communication and wireless fidelity Wi-Fi communication and an operating bandwidth in which the electronic device currently performs the Wi-Fi communication by using the second antenna is a second operating bandwidth, when isolation between the first antenna and the second antenna is less than a first isolation threshold, controlling the electronic device to perform communication in a first parallel mode, where the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
if the electronic device needs to enter the parallel mode and the operating bandwidth in which the electronic device currently performs the Wi-Fi communication by using the second antenna is the second operating bandwidth, when the isolation between the first antenna and the second antenna is less than a second isolation threshold, controlling the electronic device to perform communication in a time division mode, where the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

The parallel mode indicates that the Bluetooth communication and the Wi-Fi communication are separately performed by using different antennas.

It should be understood that the processor 1310 may be configured to perform the steps performed by the electronic device in the method 1000. For detailed descriptions, refer to the related descriptions above. Details are not described again.

It should be noted that the first processing module or the Wi-Fi module in the method 1000 may be some or all of functional modules in the processor 1310 herein.

In another possible implementation, the electronic device 1300 is configured to perform the procedures and the steps corresponding to the electronic device in the foregoing method 1100. The processor 1310 is configured to control the electronic device to perform the following steps:
determining whether a first Bluetooth service and a first router are a Bluetooth service and a router that are recorded in a whitelist, where the first Bluetooth service is a to-be-performed service or an ongoing service, and the first router is configured to provide a Wi-Fi network; and
when the first Bluetooth service and the first router are the Bluetooth service and the router that are recorded in the whitelist, searching the whitelist based on isolation between the first antenna and the second antenna, the first Bluetooth service, and the first router to determine a target operation mode of Bluetooth communication and Wi-Fi communication, where an operating frequency band of the Wi-Fi communication is the same as an operating frequency band of the Bluetooth communication.

The whitelist includes four types of content; the four types of content include: a plurality of Bluetooth services, a plurality of routers, a plurality of isolation ranges, and three operation modes; the four types of content form M combinations; each combination includes: one Bluetooth service, one router, one isolation range, and one operation mode; the Bluetooth service, the router, and the isolation range in each combination are used to determine a corresponding operation mode; and the target operation mode is any one of the three operation modes.

The three operation modes include: a time division mode, a first parallel mode, and a second parallel mode; the time division mode indicates that the Bluetooth communication and the Wi-Fi communication are performed through time division by multiplexing the second antenna, and an operating bandwidth of the Wi-Fi communication is a second operating bandwidth; the first parallel mode indicates that the Bluetooth communication is performed by using the first antenna and the Wi-Fi communication is performed by using the second antenna, and the operating bandwidth of the Wi-Fi communication is a first operating bandwidth; the second parallel mode indicates that the Bluetooth communication is performed by using the first antenna and the Wi-Fi communication is performed by using the second antenna, and the operating bandwidth of the Wi-Fi communication is the second operating bandwidth; and the second operating bandwidth is greater than the first operating bandwidth.

It should be understood that the processor 1310 may be configured to perform the steps performed by the electronic device in the method 1000. For detailed descriptions, refer to the related descriptions above. Details are not described again.

It should be understood that specific processes in which the components perform the corresponding steps in the foregoing methods have been described in detail in the foregoing method embodiments. For brevity, details are not described herein again.

It should be understood that, in the embodiments of this application, the processor of the apparatus may be a central processing unit (central processing unit, CPU), and the processor may alternatively be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, the steps of the foregoing methods may be implemented by using a hardware integrated logic circuit in the processor or instructions in a form of software. The steps of the methods disclosed with reference to the embodiments of this application may be directly implemented by a hardware processor, or may be implemented by a combination of hardware and a software unit in a processor. The software unit may be stored in a storage medium that is mature in the art, such as a RAM, a flash memory, a read-only memory (ROM), a programmable ROM, an electrically erasable programmable memory, or a register. The storage medium is located in the memory. The processor executes the instructions in the memory, and completes the steps of the foregoing methods in combination with hardware thereof. To avoid repetition, details are not described herein again.

Embodiments of this application provide a computer program product. The computer program product, when run on a terminal device, causes the terminal device to perform the technical solutions in the foregoing embodiments. Their implementation principles and technical effects are similar those in the method-related embodiments, and details are not described herein again.

Embodiments of this application provide a readable storage medium. The readable storage medium stores instructions. The instructions, when run on a terminal device, cause the terminal device to perform the technical solutions in the foregoing embodiments. The implementation principles and technical effects thereof are similar, and details are not described herein again.

Embodiments of this application provide a chip. The chip is configured to execute instructions. The chip, when run, performs the technical solutions in the foregoing embodiments. The implementation principles and technical effects thereof are similar, and details are not described herein again.

All or some of the foregoing embodiments may be implemented by using software, hardware, firmware, or any combination thereof. When implemented by using software, all or some of the foregoing embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by the computer, or a data storage device such as a server or a data center, integrating one or more usable media. The usable medium may be a magnetic medium (such as a floppy disk, a hard disk, or a magnetic tape), an optical medium (such as a digital video disc (digital video disc, DVD)), a semiconductor medium (such as a solid-state drive (solid state disk, SSD)) or the like.

It should be understood that "embodiments" mentioned throughout the specification means that particular features, structures, or characteristics related to the embodiments are included in at least one embodiment of this application. Therefore, the embodiments throughout the specification may not necessarily refer to the same embodiment. In addition, the particular features, structures, or suitableties may be combined in one or more embodiments in any suitable manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be further understood that in this application, "when" and "if" both mean that the UE or the base station performs corresponding processing in an objective situation. This is not limited in time, does not require a determining action when the UE or the base station implements the processing, and does not mean that there is another limitation.

A person of ordinary skill in the art may understand that various numbers such as first and second in this application are merely used for differentiation for ease of description, are not construed as a limitation on the scope of the embodiments of this application, and are also used for indicating a sequence.

In this application, an element represented in a singular form is intended to represent "one or more", rather than "one and only one", unless otherwise specified. In this application, unless otherwise specified, "at least one" is intended to represent "one or more", and "a plurality of" is intended to represent "two or more".

The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural.

The term "at least one of" in this specification represents all or any combination of the listed items. For example, "at least one of A, B, and C" may represent the following six cases: Only A exists, only B exists, only C exists, both A and B exist, both B and C exist, and A, B, and C all exist, where A may be singular or plural, B may be singular or plural, and C may be singular or plural.

A person of ordinary skill in the art may be aware that the units and algorithm steps of each example described with reference to embodiments disclosed herein can be implemented in electronic hardware or a combination of computer software and electronic hardware. Whether the functions are performed by hardware or software depends on particular applications and design constraints of the technical solutions. A person skilled in the art can a use different method for each specific application to implement a described function, but this shall not be considered as departing from the scope of this application.

A person skilled in the art can clearly understand that for convenient and brief description, for detailed working processes of the foregoing systems, apparatuses, and units, refer to the corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separated, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

For same or similar parts in the embodiments of this application, refer to these embodiments. In the embodiments of this application and the implementations/implementation methods in the embodiments, unless otherwise specified or in logical conflicts, terms and/or descriptions between different embodiments and implementations/implementation methods in the embodiments have consistency and may be mutually referenced. Technical features in different embodiments and implementations/implementation methods in the embodiments may be combined according to internal logical relationships thereof to form a new embodiment, implementation, implementation method. The foregoing implementations of this application do not constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, a protection scope of this application should be subject to a protection scope of the claims. In short, the foregoing descriptions are merely example embodiments of this application and are not intended to limit the protection scope of this application. Any modification, equivalent substitution, and improvement made based on the disclosure of this application shall fall within the protection scope of this application.

## Claims

1. A short-distance communication method, applied to an electronic device, wherein the electronic device is configured with a first antenna and a second antenna, the first antenna is different from the second antenna, and the method comprises:
determining that the electronic device needs to enter a parallel mode of Bluetooth communication and wireless fidelity Wi-Fi communication, wherein the parallel mode indicates that the Bluetooth communication and the Wi-Fi communication are separately performed by using different antennas, and an operating frequency band of the Bluetooth communication is the same as an operating frequency band of the Wi-Fi communication;
determining that an operating bandwidth in which the electronic device currently performs the Wi-Fi communication by using the second antenna is a second operating bandwidth; and
performing communication in a first parallel mode when isolation between the first antenna and the second antenna is less than a first isolation threshold, wherein the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
performing communication in a time division mode when isolation between the first antenna and the second antenna is less than a second isolation threshold, wherein the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold.

2. The method according to claim 1, further comprising:
performing communication in a second parallel mode when the isolation between the first antenna and the second antenna is greater than the first isolation threshold, wherein the second parallel mode indicates that the Bluetooth communication is performed by using the first antenna and the Wi-Fi communication is performed by using the second antenna, and the operating bandwidth of the Wi-Fi communication is the second operating bandwidth.

3. The method according to claim 1 or 2, wherein the performing communication in a first parallel mode when isolation between the first antenna and the second antenna is less than a first isolation threshold comprises:
performing communication in the first parallel mode when the isolation between the first antenna and the second antenna is less than the first isolation threshold and is greater than the second isolation threshold.

4. The method according to any one of claims 1 to 3, wherein the determining that the electronic device needs to enter a parallel mode of Bluetooth communication and wireless fidelity Wi-Fi communication comprises:
when a communication status of the electronic device meets a first preset condition, determining that the electronic device needs to enter the parallel mode, wherein the first preset condition comprises any one of the following:
the electronic device performs the Wi-Fi communication by using the second antenna and is to perform the Bluetooth communication; or
the electronic device performs the Wi-Fi communication and the Bluetooth communication through time division by multiplexing the second antenna; or
the electronic device performs the Wi-Fi communication and the Bluetooth communication through time division by multiplexing the second antenna, and a priority of a currently performed Bluetooth service is lower than a priority of a to-be-performed Bluetooth service.

5. The method according to any one of claims 1 to 4, wherein after the performing communication in a first parallel mode when isolation between the first antenna and the second antenna is less than a first isolation threshold, the method further comprises:
when the communication status of the electronic device meets a second preset condition, determining to exit the first parallel mode; and
setting the operating bandwidth of the Wi-Fi communication to the second operating bandwidth.

6. The method according to claim 5, wherein the second preset condition comprises any one of the following:
the electronic device stops the Bluetooth communication; or
the electronic device performs communication in the first parallel mode, and the priority of the currently performed Bluetooth service is higher than the priority of the to-be-performed Bluetooth service.

7. The method according to any one of claims 1 to 6, further comprising:
determining the isolation between the first antenna and the second antenna based on configuration information, wherein the configuration information indicates isolation between antennas configured in the electronic device.

8. The method according to claim 7, wherein the electronic device comprises a Wi-Fi module and a first processing module, the Wi-Fi module is configured with the configuration information, and the method further comprises:
receiving, by the first processing module, the configuration information sent by the Wi-Fi module; and
the determining the isolation between the first antenna and the second antenna based on configuration information comprises:
determining, by the first processing module, the isolation between the first antenna and the second antenna based on the configuration information.

9. The method according to claim 8, wherein the performing communication in a first parallel mode when isolation between the first antenna and the second antenna is less than a first isolation threshold comprises:
when the isolation between the first antenna and the second antenna is less than the first isolation threshold, determining, by the first processing module, that an operation mode of the Bluetooth communication and the Wi-Fi communication is the first parallel mode;
sending, by the first processing module, first bandwidth information to the Wi-Fi module, wherein the first bandwidth information indicates the first operating bandwidth; and
setting, by the Wi-Fi module, the operating bandwidth of the Wi-Fi communication to the first operating bandwidth, so that the electronic device performs communication in the first parallel mode.

10. The method according to claim 8, wherein the performing communication in a time division mode when isolation between the first antenna and the second antenna is less than a second isolation threshold comprises:
when the isolation between the first antenna and the second antenna is less than the second isolation threshold, determining, by the first processing module, that an operation mode of the Bluetooth communication and the Wi-Fi communication is the time division mode;
sending, by the first processing module, second bandwidth information to the Wi-Fi module, wherein the second bandwidth information indicates the second operating bandwidth; and
maintaining, by the Wi-Fi module, the operating bandwidth of the Wi-Fi communication as the second operating bandwidth, so that the electronic device performs communication in the time division mode.

11. The method according to claim 7, wherein the electronic device comprises a Wi-Fi module and a first processing module, the first processing module is configured with the configuration information, and the method further comprises:
receiving, by the Wi-Fi module, the configuration information sent by the first processing module; and
the determining the isolation between the first antenna and the second antenna based on configuration information comprises:
determining, by the Wi-Fi module, the isolation between the first antenna and the second antenna based on the configuration information.

12. The method according to claim 10, wherein the performing communication in a first parallel mode when isolation between the first antenna and the second antenna is less than a first isolation threshold comprises:
when the isolation between the first antenna and the second antenna is less than the first isolation threshold, determining, by the Wi-Fi module, that the operation mode of the Bluetooth communication and the Wi-Fi communication is the first parallel mode; and
setting, by the Wi-Fi module, the operating bandwidth of the Wi-Fi communication to the first operating bandwidth, so that the electronic device performs communication in the first parallel mode.

13. The method according to claim 10, wherein the performing communication in a time division mode when isolation between the first antenna and the second antenna is less than a second isolation threshold comprises:
when the isolation between the first antenna and the second antenna is less than the second isolation threshold, determining, by the Wi-Fi module, that the operation mode of the Bluetooth communication and the Wi-Fi communication is the time division mode; and
maintaining, by the Wi-Fi module, the operating bandwidth of the Wi-Fi communication as the second operating bandwidth, so that the electronic device performs communication in the time division mode.

14. The method according to any one of claims 1 to 13, wherein the first antenna is further used for cellular communication.

15. The method according to any one of claims 1 to 14, wherein the first operating bandwidth is 20 MHz, and the second operating bandwidth is 40 MHz.

16. The method any one of claims 1 to 15, wherein the operating frequency band of the Wi-Fi communication and the Bluetooth communication is a 2.4 GHz operating frequency band.

17. A short-distance communication method, applied to an electronic device, wherein the electronic device is configured with a first antenna and a second antenna, the first antenna is different from the second antenna, and the method comprises:
determining whether a first Bluetooth service and a first router are a Bluetooth service and a router that are recorded in a whitelist, wherein the first Bluetooth service is a to-be-performed service or an ongoing service, and the first router is configured to provide a Wi-Fi network; and
when the first Bluetooth service and the first router are the Bluetooth service and the router that are recorded in the whitelist, searching the whitelist based on isolation between the first antenna and the second antenna, the first Bluetooth service, and the first router to determine a target operation mode of Bluetooth communication and Wi-Fi communication, wherein an operating frequency band of the Wi-Fi communication is the same as an operating frequency band of the Bluetooth communication, wherein
the whitelist comprises four types of content; the four types of content comprise: a plurality of Bluetooth services, a plurality of routers, a plurality of isolation ranges, and three operation modes; the four types of content form M combinations; each combination comprises: one Bluetooth service, one router, one isolation range, and one operation mode; the Bluetooth service, the router, and the isolation range in each combination are used to determine a corresponding operation mode; and the target operation mode is any one of the three operation modes; and
the three operation modes comprise: a time division mode, a first parallel mode, and a second parallel mode; the time division mode indicates that the Bluetooth communication and the Wi-Fi communication are performed through time division by multiplexing the second antenna, and an operating bandwidth of the Wi-Fi communication is a second operating bandwidth; the first parallel mode indicates that the Bluetooth communication is performed by using the first antenna and the Wi-Fi communication is performed by using the second antenna, and the operating bandwidth of the Wi-Fi communication is a first operating bandwidth; the second parallel mode indicates that the Bluetooth communication is performed by using the first antenna and the Wi-Fi communication is performed by using the second antenna, and the operating bandwidth of the Wi-Fi communication is the second operating bandwidth; and the second operating bandwidth is greater than the first operating bandwidth.

18. The method according to claim 17, wherein before the determining whether a first Bluetooth service and a first router are a Bluetooth service and a router that are recorded in a whitelist, the method further comprises:
determining that a communication status of the electronic device meets a first preset condition, wherein the first preset condition comprises any one of the following:
the electronic device performs the Wi-Fi communication by using the second antenna and is to perform the Bluetooth communication; or
the electronic device performs the Wi-Fi communication and the Bluetooth communication through time division by multiplexing the second antenna; or
the electronic device performs the Wi-Fi communication and the Bluetooth communication through time division by multiplexing the second antenna, and a priority of a currently performed Bluetooth service is lower than a priority of a to-be-performed Bluetooth service.

19. The method according to claim 17 or 18, wherein the target operation mode is the first parallel mode, and the method further comprises:
when the communication status of the electronic device meets a second preset condition, determining to exit the first parallel mode; and
setting the operating bandwidth of the Wi-Fi communication to the second operating bandwidth.

20. The method according to claim 19, wherein the second preset condition comprises any one of the following:
the electronic device stops the Bluetooth communication; or
the electronic device performs communication in the first parallel mode, and the priority of the currently performed Bluetooth service is higher than the priority of the to-be-performed Bluetooth service.

21. The method according to any one of claims 17 to 20, further comprising:
obtaining the whitelist from a server.

22. The method according to any one of claims 17 to 21, wherein the first operating bandwidth is 20 MHz, and the second operating bandwidth is 40 MHz.

23. A short-distance communication method, applied to a chip, wherein the chip is configured in an electronic device, the electronic device is configured with a first antenna and a second antenna, the first antenna is different from the second antenna, and the method comprises:
if the electronic device needs to enter a parallel mode of Bluetooth communication and wireless fidelity Wi-Fi communication and an operating bandwidth in which the electronic device currently performs the Wi-Fi communication by using the second antenna is a second operating bandwidth, when isolation between the first antenna and the second antenna is less than a first isolation threshold, controlling the electronic device to perform communication in a first parallel mode, wherein the first parallel mode indicates that the Bluetooth communication is performed by using the first antenna and the Wi-Fi communication is performed by using the second antenna, the operating bandwidth of the Wi-Fi communication is a first operating bandwidth, and the first operating bandwidth is less than the second operating bandwidth; or
if the electronic device needs to enter the parallel mode and the operating bandwidth in which the electronic device currently performs the Wi-Fi communication by using the second antenna is the second operating bandwidth, when the isolation between the first antenna and the second antenna is less than a second isolation threshold, controlling the electronic device to perform communication in a time division mode, wherein the time division mode indicates that the Bluetooth communication and the Wi-Fi communication are performed through time division by multiplexing the second antenna, the operating bandwidth of the Wi-Fi communication is the second operating bandwidth, and the second isolation threshold is less than the first isolation threshold; and
the parallel mode indicates that the Bluetooth communication and the Wi-Fi communication are separately performed by using different antennas.

24. The method according to claim 23, further comprising:
if the electronic device needs to enter the parallel mode and the operating bandwidth in which the electronic device currently performs the Wi-Fi communication by using the second antenna is the first operating bandwidth, when the isolation between the first antenna and the second antenna is greater than the first isolation threshold, controlling the electronic device to perform communication in a second parallel mode, wherein the second parallel mode indicates that the Bluetooth communication is performed by using the first antenna and the Wi-Fi communication is performed by using the second antenna, and the operating bandwidth of the Wi-Fi communication is the second operating bandwidth.

25. The method according to claim 23 or 24, wherein the controlling the electronic device to perform communication in a first parallel mode comprises:
if the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold and is greater than the second isolation threshold, controlling the electronic device to perform communication in the first parallel mode.

26. The method according to any one of claims 23 to 25, further comprising:
determining the isolation between the first antenna and the second antenna based on configuration information, wherein the configuration information indicates isolation between antennas configured in the electronic device.

27. The method according to claim 26, wherein the chip comprises a first processing module, the electronic device comprises a Wi-Fi module, and the method further comprises:
receiving, by the first processing module, the configuration information sent by the Wi-Fi module; and
the determining the isolation between the first antenna and the second antenna based on configuration information comprises:
determining, by the first processing module, the isolation between the first antenna and the second antenna based on the configuration information.

28. The method according to claim 27, wherein the controlling the electronic device to perform communication in a first parallel mode comprises:
if the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold, determining, by the first processing module, that an operation mode of the Bluetooth communication and the Wi-Fi communication is the first parallel mode; and
sending, by the first processing module, first bandwidth information to the Wi-Fi module, wherein the first bandwidth information indicates the first operating bandwidth, so that the Wi-Fi module sets the operating bandwidth of the Wi-Fi communication to the first operating bandwidth to control the electronic device to perform communication in the first parallel mode.

29. The method according to claim 27, wherein the controlling the electronic device to perform communication in a time division mode comprises:
if the electronic device needs to enter the parallel mode and the operating bandwidth in which the electronic device currently performs the Wi-Fi communication by using the second antenna is the second operating bandwidth, when the isolation between the first antenna and the second antenna is less than the second isolation threshold, determining, by the first processing module, that an operation mode of the Bluetooth communication and the Wi-Fi communication is the time division mode; and
sending, by the first processing module, second bandwidth information to the Wi-Fi module, wherein the second bandwidth information indicates the second operating bandwidth, so that the Wi-Fi module maintains the operating bandwidth of the Wi-Fi communication as the second operating bandwidth to control the electronic device to perform communication in the time division mode.

30. The method according to claim 26, wherein the chip comprises a Wi-Fi module, the electronic device comprises a first processing module, and the method further comprises:
receiving, by the Wi-Fi module, the configuration information sent by the first processing module; and
the determining the isolation between the first antenna and the second antenna based on configuration information comprises:
determining, by the Wi-Fi module, the isolation between the first antenna and the second antenna based on the configuration information.

31. The method according to claim 30, wherein the controlling the electronic device to perform communication in a first parallel mode comprises:
if the electronic device needs to enter the parallel mode and the operating bandwidth in which the electronic device currently performs the Wi-Fi communication by using the second antenna is the second operating bandwidth, when the isolation between the first antenna and the second antenna is less than the first isolation threshold, determining, by the Wi-Fi module, that an operation mode of the Bluetooth communication and the Wi-Fi communication is the first parallel mode; and
setting, by the Wi-Fi module, the operating bandwidth of the Wi-Fi communication to the first operating bandwidth, so that the electronic device performs communication in the first parallel mode.

32. The method according to claim 30, wherein the controlling the electronic device to perform communication in a time division mode comprises:
if the electronic device needs to enter the parallel mode and the operating bandwidth in which the electronic device currently performs the Wi-Fi communication by using the second antenna is the second operating bandwidth, when the isolation between the first antenna and the second antenna is less than the second isolation threshold, determining, by the Wi-Fi module, that an operation mode of the Bluetooth communication and the Wi-Fi communication is the time division mode; and
maintaining, by the Wi-Fi module, the operating bandwidth of the Wi-Fi communication as the second operating bandwidth, so that the electronic device performs communication in the time division mode.

33. The method according to any one of claims 23 to 32, wherein the first operating bandwidth is 20 MHz, and the second operating bandwidth is 40 MHz.

34. A short-distance communication apparatus, comprising a processing module, wherein the processing module is configured to perform the method according to any one of claims 1 to 16, 17 to 22, and 23 to 33.

35. An electronic device, comprising: a memory, configured to store computer instructions; and a processor, configured to invoke the computer instructions stored in the memory to perform the method according to any one of claims 1 to 16, 17 to 22, and 23 to 33.

36. A computer-readable storage medium, configured to store computer instructions, wherein the computer instructions are used to implement the method according to any one of claims 1 to 16, 17 to 22, and 23 to 33.

37. A chip, comprising:
a memory, configured to store instructions; and
a processor, configured to invoke the instructions from the memory and run the instructions to enable the electronic device equipped with the chip to perform the method according to any one of claims 1 to 16, 17 to 22, and 23 to 33.
